(19) Europäisches Patentamt
European Patent Office
Office européen des brevets

(11) **EP 3 978 101 A1**

(12) **EUROPEAN PATENT APPLICATION**
published in accordance with Art. 153(4) EPC

(43) Date of publication:
06.04.2022 Bulletin 2022/14

(21) Application number: 20813245.6

(22) Date of filing: 28.05.2020

(51) International Patent Classification (IPC):
*B01D 61/00* (2006.01)  *B01D 63/02* (2006.01)
*B01D 69/00* (2006.01)  *B01D 69/08* (2006.01)
*B01D 69/10* (2006.01)  *B01D 69/12* (2006.01)
*B01D 71/32* (2006.01)  *B01D 71/34* (2006.01)
*B01D 71/38* (2006.01)  *B01D 71/42* (2006.01)
*B01D 71/52* (2006.01)  *B01D 71/56* (2006.01)
*B01D 71/60* (2006.01)  *B01D 71/62* (2006.01)
*B01D 71/64* (2006.01)  *B01D 71/68* (2006.01)
*F26B 5/06* (2006.01)  *A23L 5/00* (2016.01)

(52) Cooperative Patent Classification (CPC):
A23L 5/00; B01D 61/00; B01D 63/02; B01D 69/00;
B01D 69/08; B01D 69/10; B01D 69/12;
B01D 71/32; B01D 71/34; B01D 71/38;
B01D 71/42; B01D 71/52; B01D 71/56;
B01D 71/60; B01D 71/62;   (Cont.)

(86) International application number:
PCT/JP2020/021232

(87) International publication number:
WO 2020/241795 (03.12.2020 Gazette 2020/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.05.2019 JP 2019102672

(71) Applicant: Asahi Kasei Kabushiki Kaisha
Tokyo 1000006 (JP)

(72) Inventors:
• MIKAWA, Masato
Tokyo 100-0006 (JP)
• FUJITA, Mitsuru
Tokyo 100-0006 (JP)
• HOTTA, Daisuke
Tokyo 100-0006 (JP)

(74) Representative: D Young & Co LLP
120 Holborn
London EC1N 2DY (GB)

(54) **RAW MATERIAL SOLUTION CONCENTRATION SYSTEM**

(57)    A raw material solution concentration system that has: a first unit for obtaining a concentrated raw material solution and a diluted induction solution by bringing a raw material solution containing a solvent and a solute into contact with an induction solution containing an induction solute through a forward osmosis membrane and transferring the solvent in the raw material solution into the induction solution and the induction solute in the induction solution into the raw material solution; and a second unit for performing a freeze-dry treatment on the concentrated raw material solution and obtaining a further-concentrated product.

FIG. 1

(52) Cooperative Patent Classification (CPC): (Cont.)
**B01D 71/64; B01D 71/68; F26B 5/06**

**Description**

FIELD

The present invention relates to a raw material liquid concentration system. Specifically, the present invention relates to a raw material liquid concentration system which uses a method in which a raw material liquid is concentrated using the forward osmosis method and then dried using the freeze-drying method. More specifically, the present invention relates to a raw material liquid concentration system in which, in the forward osmosis method, the draw solution permeates to the raw material liquid side at an appropriate flow rate to suppress the adhesion of raw material components to the surface of the forward osmosis membrane, whereby the yield of the freeze-dried raw material component is increased.

BACKGROUND

In various applications, it is an object to concentrate a specific component (solute) present in a raw material liquid. As a traditional concentration method, an evaporation method in which a raw material liquid is heated to remove the solvent is known. However, in the evaporation method, the solute component may adhere to the inner wall of the evaporation device due to heating, whereby the recovery rate of the solute is not sufficient.

As another concentration method, the reverse osmosis (RO) method using a membrane which allows a solvent to permeate at the molecular level is known. The RO method is a method in which a raw material liquid is concentrated by increasing the pressure of the raw material liquid to a predetermined pressure higher than the osmotic pressure of the raw material liquid, feeding it to a reverse osmosis (RO) membrane module and allowing it to permeate the RO membrane to remove the solvent (typically water) in the raw material liquid. However, since the RO method requires pressurization, when applied to raw material liquids containing large amounts of solids, oils, and high molecular weight substances, since the RO membrane is easily clogged, the life of the RO membrane is short, and the recovery rate of the solution is not sufficient. Thus, the RO method may be inappropriate for application to raw material liquids such as foods, beverages, and pharmaceuticals. In the RO method, the osmotic pressure of the solvent (filtered solvent) of the concentrated raw material liquid does not exceed the pressure of the high-pressure pump used for pressurization. Thus, the concentration rate of raw material liquid by the RO method is limited depending on the capacity of the pump.

The RO method is mainly used for the desalination of seawater, focusing on the solvent (water) removed from the raw material liquid.

As another raw material liquid concentration method, the forward osmosis (FO) method in which the solvent in a raw material liquid is separated using a difference in osmotic pressure is known. The FO method is a method for concentrating a raw material liquid by contacting the raw material liquid and a draw solution having a higher osmotic pressure than the raw material liquid via an FO membrane to separate the solvent from the raw material liquid to the draw solution. Since the FO method does not require pressurization, it is expected that the desired concentration effect can be maintained for a long period of time even if the raw material liquid contains large amounts of solids and high molecular weight substances.

As a raw material liquid concentration method other than these, a freeze-drying method in which a raw material liquid is frozen and then the solvent in the raw material liquid is sublimated to concentrate the raw material liquid is known. Since the freeze-drying method does not require high-temperature heating, it is possible to concentrate while suppressing deterioration of components and deformation of solid content in the raw material liquid. Foods that have undergone freeze-dry processing (freeze-dried foods) have advantages, for example, little change in nutritional components such as vitamins and flavor components, storage for long periods of time at room temperature, relatively lightweight due to their low moisture content, and high transportability. Because of these advantages, the freeze-drying method is currently applied to a wide variety of foods and pharmaceuticals.

However, the freeze-drying method requires a vacuum pump for creating a high vacuum, a heat source for sublimation, and a cooling unit for recovering solvent vapor generated from raw material liquid as a liquid or a solid. In addition to the need to completely freeze the raw material liquid in advance, the time required for freeze-drying increases remarkably as the volume and thickness of the frozen body increase. Thus, to apply the freeze-drying method to concentrating a raw material liquid, it is necessary to concentrate the raw material liquid before freeze-drying to the greatest extent possible in order to reduce the energy cost of the vacuum pump, heat source, and cooling unit.

It is known that the amount of water in the raw material liquid is involved in the maintenance rate of the solute of the concentrate after freeze-drying. For example, Non-Patent Literature 1 discloses that the amount of solute maintained in a concentrate after freeze-drying decreases in proportion to the moisture removal rate from the raw material liquid during freeze-drying. From this, in order to obtain a concentrate after freeze-drying (hereinafter, also referred to as a dry-frozen concentrate) having a higher solute maintenance rate, it is necessary to concentrate the raw material liquid to be freeze-dried to the greatest extent possible.

As a concentration step in such a freeze-drying pretreatment, for example, Patent Literature 1 proposes a

**EP 3 978 101 A1**

method in which the RO method is used in two steps. Patent Literature 2 proposes the use of a centrifugation method or an ultrafiltration method as another concentration step in freeze-drying pretreatment.

[CITATION LIST]

[PATENT LITERATURE]

[PTL 1] Japanese Unexamined Patent Publication (Kokai) No. 11-75759
[PTL 2] WO 2011/151726

[NON-PATENT LITERATURE]

[NPL 1] Nippon Shokuhin Kogyo Gakkaishi. 1982, 30 (2), pp. 125-132

SUMMARY

The RO method described in Patent Literature 1 is a method in which heating is not essential, whereby the components are less likely to be altered by heating. However, the RO method requires pressurization of the raw material liquid as described above. Thus, in the method described in Patent Literature 1, since the solute in the raw material liquid may adhere (fouling) to the surface of the RO film, it may cause a problem in that the recovery rate of the solute component after freeze-drying cannot be sufficiently increased.

In the centrifugation method described in Patent Literature 2, since the solute and solvent are present in the same system, it is often difficult to remove only the solute from the solution. In the case of the centrifugal separation method using a filter, there may be a problem that the solute loss is large due to clogging of the membrane.

Conversely, in the ultrafiltration method, a sufficient yield may not be obtained mainly because low molecular weight solute may pass through the filter of the ultrafiltration membrane. Specifically, since a part or all of a substance having a molecular weight equal to or less than the molecular weight cut-off of the ultrafiltration membrane permeates the membrane, it cannot be concentrated while maintaining the component composition of the raw material liquid.

[TECHNICAL PROBLEM]

As mentioned above, as a concentration method for a raw material liquid in freeze-drying pretreatment, it is demanded to concentrate a solute in a raw material liquid without loss.

Thus, an object of the present invention is to provide a raw material liquid concentration system using the freeze-drying method, wherein a freeze-dried concentrate can be obtained at a high yield by providing an appropriate pretreatment step in the freeze-drying (carrying out the pretreatment step).

[SOLUTION TO PROBLEM]

Examples of Aspects for carrying out the present invention are as described below.

<<Aspect 1>>

A raw material liquid concentration system, comprising:

a first unit for obtaining a concentrated raw material liquid and a diluted draw solution by contacting a raw material liquid containing a solvent and a solute and a draw solution containing a draw solute via a forward osmosis membrane to move the solvent in the raw material liquid into the draw solution and move the draw solute in the draw solution into the raw material liquid, and
a second unit for freeze-dry processing the concentrated raw material liquid to obtain a further concentrated product.

<<Aspect 2>>

The raw material liquid concentration system according to Aspect 1, wherein a back diffusion rate of the draw solute by which the draw solute in the draw solution moves into the raw material liquid in the first unit is 200 g/($m^2 \times$ hr) or less.

4

<<Aspect 3>>

The raw material liquid concentration system according to Aspect 1, wherein a back diffusion rate of the draw solute by which the draw solute in the draw solution moves into the raw material liquid in the first unit is 0.001 g/(m$^2$ × hr) to 50 g/(m$^2$ × hr).

<<Aspect 4>>

The raw material liquid concentration system according to any one of Aspects 1 to 3, wherein an initial permeation flow velocity of the forward osmosis membrane regarding the solvent in the first unit is 0.15 L/(m$^2$ × hr) to 35 L/(m$^2$ × hr).

<<Aspect 5>>

The raw material liquid concentration system according to any one of Aspects 1 to 4, wherein the solvent contained in the raw material liquid comprises:

water, and
one or two or more selected from the group consisting of acetonitrile, methanol, and 2-propanol.

<<Aspect 6>>

The raw material liquid concentration system according to Aspect 4, wherein the solvent further comprises an acid component, and
the pH of the solvent is 1 to 4.

<<Aspect 7>>

The raw material liquid concentration system according to Aspect 6, wherein the acid component is one or two selected from the group consisting of trifluoroacetic acid and acetic acid.

<<Aspect 8>>

The raw material liquid concentration system according to any one of Aspects 1 to 7, wherein the solute of the raw material liquid comprises one or two or more selected from the group consisting of sugars, amino acids, oligopeptides, enzymes, and nucleic acids.

<<Aspect 9>>

The raw material liquid concentration system according to any one of Aspects 1 to 7, wherein the solute comprises a compound having a number average molecular weight of 100 to 6,000.

<<Aspect 10>>

The raw material liquid concentration system according to any one of Aspects 1 to 9, wherein in the first unit, the contact between the raw material liquid and the draw solution via the forward osmosis membrane is a crossflow-type contact.

<<Aspect 11>>

The raw material liquid concentration system according to any one of Aspects 1 to 10, wherein in the first unit, the temperature of the raw material liquid is 5 °C to 50 °C.

<<Aspect 12>>

The raw material liquid concentration system according to any one of Aspects 1 to 11, further comprising a first draw solution regeneration system for removing the solvent from the diluted draw solution to obtain a regenerated draw solution, and using the obtained regenerated draw solution as the draw solution.

<<Aspect 13>>

The raw material liquid concentration system according to Aspect 12, wherein in the first draw solution regeneration system, the removal of the solvent from the diluted draw solution comprises evaporation of the solvent from the diluted draw solution.

<<Aspect 14>>

The raw material liquid concentration system according to any one of Aspects 1 to 13, further comprising a second draw solution regeneration system for removing the solvent from the draw solution to obtain a concentrated draw solution, mixing the obtained concentrated draw solution and the diluted draw solution to obtain a mixture, and using the obtained mixture as the draw solution.

<<Aspect 15>>

The raw material liquid concentration system according to Aspect 14, wherein in the second draw solution regeneration system, the removal of the solvent from the draw solution comprises evaporation of the solvent from the draw solution.

<<Aspect 16>>

The raw material liquid concentration system according to any one of Aspects 1 to 14, wherein the draw solution is a solution comprising an inorganic salt as the draw solute.

<<Aspect 17>>

The raw material liquid concentration system according to any one of Aspects 1 to 16, wherein the draw solution is a solution comprising an alcohol as the draw solute.

<<Aspect 18>>

The raw material liquid concentration system according to Aspect 17, wherein the alcohol comprises one or two selected from ethanol and 2-propanol.

<<Aspect 19>>

The raw material liquid concentration system according to any one of Aspects 1 to 18, wherein the forward osmosis membrane is a membrane comprising a thin membrane layer having, as primary components, one or two or more selected form the group consisting of polyethersulfone, polysulfone, polyketone, polyetheretherketone, polyphenylene ether, polyvinylidene fluoride, polyacrylonitrile, polyimine, polyimide, polybenzoxazole, polybenzimidazole, a perfluorosulfonic acid polymer, and polyamide.

<<Aspect 20>>

The raw material liquid concentration system according to any one of Aspects 1 to 19, wherein the forward osmosis membrane is a hollow fiber membrane.

<<Aspect 21>>

The raw material liquid concentration system according to Aspect 20, wherein the first unit is in the form of a membrane module comprising a hollow-fiber fiber bundle constituted by a plurality of the hollow fiber forward osmosis membranes,

each hollow fiber forward osmosis membrane comprises a microporous support membrane and a high molecular weight polymer thin film separation active layer provided on an inner surface of the microporous support membrane, a total membrane area of the hollow-fiber fiber bundle is 0.01 $m^2$ or more, and a coefficient of variation in thickness of the separation active layer in the radial direction and the longitudinal direction of the hollow-fiber fiber bundle as calculated by a method in which the mass of the separation active layer portion is measured in a scanning electron microscope image, in which a thickness direction cross-section of the separation active layer is captured, is 0 to 60%.

<<Aspect 22>>

The raw material liquid concentration system according to any one of Aspects 1 to 21, comprising a circulation mechanism which uses the concentrated raw material liquid obtained by the first unit as the raw material liquid in the first unit.

<<Aspect 23>>

A raw material liquid concentration method, comprising:

a first step of obtaining a concentrated raw material liquid and a diluted draw solution by contacting a raw material liquid containing a solvent and a solute and a draw solution containing a draw solute via a forward osmosis membrane to move the solvent in the raw material liquid into the draw solution and move the draw solute in the draw solution into the raw material liquid, and
a second step of freeze-dry processing the concentrated raw material liquid to obtain a further concentrated product.

<<Aspect 24>>

The raw material liquid concentration method according to Aspect 23, wherein a back diffusion rate of the draw solute by which the draw solute in the draw solution moves into the raw material liquid in the first step is 200 $g/(m^2 \times hr)$ or less.

<<Aspect 25>>

The raw material liquid concentration method according to Aspect 23, wherein a back diffusion rate of a salt by which the draw solute in the draw solution moves into the raw material liquid in the first step is 0.001 $g/(m^2 \times hr)$ to 50 $g/(m^2 \times hr)$.

<<Aspect 26>>

The raw material liquid concentration method according to any one of Aspects 23 to 25, wherein an initial permeation flow velocity of the forward osmosis membrane regarding the solvent in the first step is 0.15 $L/(m^2 \times hr)$ to 35 $L/(m^2 \times hr)$.

<<Aspect 27>>

The raw material liquid concentration method according to any one of Aspects 23 to 26, wherein the solvent contained in the raw material liquid comprises:

water, and
one or two or more selected from the group consisting of acetonitrile, methanol, and 2-propanol.

<<Aspect 28>>

The raw material liquid concentration method according to Aspect 27, wherein the solvent further comprises an acid component, and
the pH of the solvent is 1 to 4.

<<Aspect 29>>

The raw material liquid concentration method according to Aspect 28, wherein the acid component is one or two selected from the group consisting of trifluoroacetic acid and acetic acid.

<<Aspect 30>>

The raw material liquid concentration method according to any one of Aspects 23 to 29, wherein the solute of the raw material liquid comprises one or two or more selected from the group consisting of sugars, amino acids, oligopeptides, enzymes, and nucleic acids.

<<Aspect 31>>

The raw material liquid concentration method according to any one of Aspects 23 to 29, wherein the solute comprises a compound having a number average molecular weight of 100 to 6,000.

<<Aspect 32>>

The raw material liquid concentration method according to any one of Aspects 23 to 31, wherein in the first step, the contact between the raw material liquid and the draw solution via the forward osmosis membrane is a crossflow-type contact.

<<Aspect 33>>

The raw material liquid concentration method according to any one of Aspects 23 to 32, wherein in the first step, the temperature of the raw material liquid is 5 °C to 50 °C.

<<Aspect 34>>

The raw material liquid concentration method according to any one of Aspects 23 to 33, further comprising a first draw solution regeneration step of removing the solvent from the diluted draw solution to obtain a regenerated draw solution, and using the obtained regenerated draw solution as the draw solution.

<<Aspect 35>>

The raw material liquid concentration method according to Aspect 34, wherein in the first draw solution regeneration step, the removal of the solvent from the diluted draw solution comprises evaporation of the solvent from the diluted draw solution.

<<Aspect 36>>

The raw material liquid concentration method according to any one of Aspects 23 to 35, further comprising a second draw solution regeneration step of removing the solvent from the draw solution to obtain a concentrated draw solution, mixing the obtained concentrated draw solution and the diluted draw solution to obtain a mixture, and using the obtained mixture as the draw solution.

<<Aspect 37>>

The raw material liquid concentration method according to Aspect 36, wherein in the second draw solution regeneration step, the removal of the solvent from the draw solution comprises evaporation of the solvent from the draw solution.

<<Aspect 38>>

The raw material liquid concentration method according to any one of Aspects 23 to 37, wherein the draw solution is a solution comprising an inorganic salt as the draw solute.

<<Aspect 39>>

The raw material liquid concentration method according to any one of Aspects 23 to 37, wherein the draw solution is a solution comprising an alcohol as the draw solute.

<<Aspect 40>>

The raw material liquid concentration method according to Aspect 39, wherein the alcohol comprises one or two selected from ethanol and 2-propanol.

<<Aspect 41>>

The raw material liquid concentration method according to any one of Aspects 23 to 40, wherein the forward osmosis membrane is a membrane comprising a thin membrane layer having, as primary components, one or two or more selected form the group consisting of polyethersulfone, polysulfone, polyketone, polyetheretherketone, polyphenylene ether, polyvinylidene fluoride, polyacrylonitrile, polyimine, polyimide, polybenzoxazole, polybenzimidazole, a perfluorosulfonic acid polymer, and polyamide.

<<Aspect 42>>

The raw material liquid concentration method according to any one of Aspects 23 to 41, wherein the forward osmosis membrane is a hollow fiber membrane.

<<Aspect 43>>

The raw material liquid concentration method according to Aspect 42, wherein in the first step, a pressure in the interior of the hollow fiber forward osmosis membrane is 10 kPa to 200 kPa.

<<Aspect 44>>

The raw material liquid concentration method according to Aspect 42 or 43, wherein the first step is carried out using a first unit which is in the form of a membrane module comprising a hollow-fiber fiber bundle constituted by a plurality of the hollow fiber forward osmosis membranes,

each hollow fiber forward osmosis membrane comprises a microporous support membrane and a high molecular weight polymer thin film separation active layer provided on an inner surface of the microporous support membrane, a total membrane area of the hollow-fiber fiber bundle is 0.01 m$^2$ or more, and a coefficient of variation in thickness of the separation active layer in the radial direction and the longitudinal direction of the hollow-fiber fiber bundle as calculated by a method in which the mass of the separation active layer portion is measured in a scanning electron microscope image, in which a thickness direction cross-section of the separation active layer is captured, is 0 to 60%.

<<Aspect 45>>

The raw material liquid concentration method according to any one of Aspects 23 to 44, comprising a circulation mechanism which uses the concentrated raw material liquid obtained in the first step as the raw material liquid in the first step.

[ADVANTAGEOUS EFFECTS OF INVENTION]

The raw material liquid concentration system of the present invention uses a combination of concentration of the raw material liquid by the reverse osmosis method and concentration by the freeze-drying method. Thus, according to the raw material liquid concentration system of the present invention, since the loss of components in the raw material liquid during the processes can be suppressed, a freeze-dried concentrate in which the component composition of the raw material liquid is maintained can be obtained at a high yield.

BRIEF DESCRIPTON OF DRAWINGS

FIG. 1 is a conceptual diagram for detailing an example of an embodiment of the raw material liquid concentration system of the present invention.
FIG. 2 is a conceptual diagram for detailing another example of an embodiment of the raw material liquid concentration system of the present invention.

FIG. 3 is a conceptual diagram for detailing yet another example of an embodiment of the raw material liquid concentration system of the present invention.

FIG. 4 is a conceptual diagram for detailing yet another example of an embodiment of the raw material liquid concentration system of the present invention.

FIG. 5 is a conceptual diagram for detailing yet another example of an embodiment of the raw material liquid concentration system of the present invention.

DESCRIPTION OF EMBODIMENTS

The embodiments (hereinafter referred to as the present embodiment) of the present invention will be specifically described in detail as non-limiting examples.

<Raw Material Liquid Concentration System>

The raw material liquid concentration system of the present inventions comprises:

a first unit for obtaining a concentrated raw material liquid and a diluted draw solution by contacting a raw material liquid containing a solvent and a solute and a draw solution containing a draw solute via a forward osmosis membrane to move the solvent in the raw material liquid into the draw solution and move the draw solute in the draw solution into the raw material liquid, and
a second unit for freeze-dry processing the concentrated raw material liquid to obtain a further concentrated product.

A preferable example of the raw material liquid concentration system of the present embodiment is a system which comprises the first unit and the second unit described above, wherein a back diffusion rate of the draw solute by which the draw solute in the draw solution moves into the raw material liquid in the first unit is 200 g/(m$^2$ × hr) or less.
Another preferable example of the raw material liquid concentration system of the present embodiment is a system which comprises the first unit and the second unit described above, wherein the back diffusion rate of the draw solute is 0.001 g/(m$^2$ × hr) to 50 g/(m$^2$ × hr).
The raw material liquid concentration system of the present embodiment can suitably be used in applications, for example, the concentration of oral liquids (liquid foods and beverages), the concentration of pharmaceutical raw materials, the concentration of reaction products in the pharmaceutical production process, the treatment of precursor solutions for chemical species synthesis, and the treatment of accompanying water discharged from gas fields (including shale gas fields) and oil fields. The oral liquid described above means everything that a human or animal eats, and includes both objects taken orally and objects discharged after being put in the mouth. Examples of orally-ingested objects include beverages such as juices and soft drinks; fluid foods such as various soup stocks, seasonings and soups; health supplements; oral medicines; and raw materials thereof. Examples of substances that are discharged after being put in the mouth include mouthwash liquids, gargles, and raw materials thereof.
The pharmaceutical raw materials described above means raw material compounds for producing pharmaceutical products. Reaction products of the pharmaceutical production process means products obtained by a chemical reaction carried out for the production of pharmaceuticals.
A summary of the raw material liquid concentration system of the present embodiment will be described with reference to the drawings as necessary.
In the first unit, the following two steps (1) and (2) are carried out simultaneously.

(1) A raw material liquid and a draw solution are contacted via a forward osmosis membrane to move the solvent in the raw material liquid into the draw solution. As a result, concentration of the raw material liquid is carried out and the draw solution is diluted, whereby a concentrated raw material liquid and a diluted draw solution are obtained.
(2) The draw solute in the draw solution is moved into the raw material liquid.

In the second unit, the concentrated raw material liquid obtained in the first unit is further concentrated by the freeze-drying method to obtain a product having a low moisture content, preferably 5% by mass or less.
As used herein, the step carried out by the first unit is referred to as the "first step", and the step carried out by the second unit of the present embodiment is referred to as the "second step." In other words, in the present description, the "first step" and "second step" can be replaced with "first unit" and "second unit", respectively, and conversely, the "first unit" and the "second unit" can be replaced with the "first step" and the "second step", respectively.
In the raw material liquid concentration system of the present embodiment, a unit which carries out a pre-stage of the freeze-drying method may be present between the first unit and the second unit.

Examples of the unit which carries out the pre-stage of the freeze-drying method include a preliminary freezing unit, a sterilization unit, a desalination unit, and a pH adjustment unit.

The first step by the first unit and the second step by the second unit may be carried out continuously without a time interval, or may be carried out with a predetermined time interval. For example, the concentrated raw material liquid obtained by the first unit may be temporarily stored, and after a predetermined time has elapsed, it may be subjected to the second unit to carry out the second step. However, it is more preferable in terms of time efficiency to connect the first unit and the second unit and continuously concentrate without setting a time interval between the first step and the second step.

An osmotic pressure measurement device may be included between the first unit and the second unit to confirm that the concentrated raw material liquid obtained in the first unit is concentrated to a predetermined osmotic pressure. The measurement of osmotic pressure by the osmotic pressure measurement device may be carried out in the first unit in which the first step is carried out, or may be carried out on a part of the concentrated raw material liquid extracted after the first step.

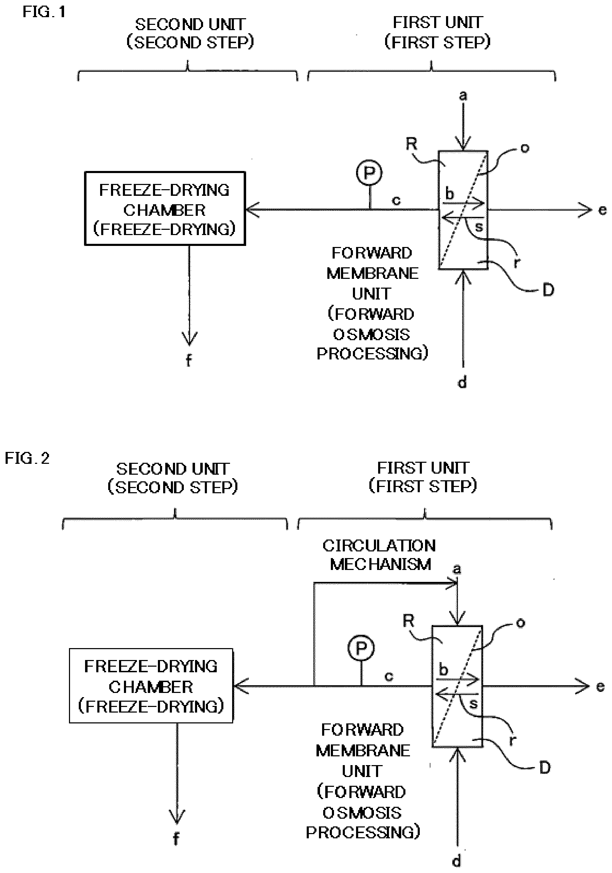

FIG. 1 shows a schematic view for detailing an example of the raw material liquid concentration system of the present embodiment, which comprises first and second units.

The first unit of the raw material liquid concentration system of FIG. 1 is a forward osmosis membrane unit which has a forward osmosis membrane o and which carries out a forward osmosis treatment. The internal space of this forward osmosis membrane unit is divided into two parts, a raw material liquid-side space R and a draw solution-side space D, by the forward osmosis membrane o. A raw material liquid a, which is the concentration target, is introduced into the raw material liquid-side space R of the forward osmosis membrane unit. Conversely, a draw solution d is introduced into the draw solution-side space D of the forward osmosis membrane unit.

The raw material liquid a contains a solute and a solvent b. The draw solution d preferably contains a draw solute (for example, an inorganic salt) and further contains the solvent b. The osmotic pressure of draw solution d is set to be higher than that of raw material liquid a.

When the raw material liquid a and the draw solution d come into contact via the forward osmosis membrane o, (1) using the difference in osmotic pressure between the two solutions as a driving force, the solvent b in the raw material liquid a passes through the forward osmosis membrane o and moves into the draw solution d.

At the same time, (2) using the partial pressure difference of the draw solute as a driving force, the draw solute in the draw solution d passes through the forward osmosis membrane o and moves into the raw material liquid a. This is back diffusion r of the draw solute.

As a result, a concentrated raw material liquid c, which is the concentrated raw material liquid, and a diluted draw solution e, which is the diluted draw solution, are obtained. In the first unit of FIG. 1, the raw material liquid a and the draw solution d flow countercurrent, but parallel flow may be adopted.

The forward osmosis treatment in the first unit may be carried out by a total amount filtration method or a cross-flow filtration method, but the cross-flow filtration method is preferable from the viewpoint of filtration flow rate and suppression of membrane contamination.

In the raw material liquid concentration system of FIG. 1, the osmotic pressure of the concentrated raw material liquid c obtained by the first unit is measured at the "P" position.

In the second unit of the raw material liquid concentration system of FIG. 1, the concentrated raw material liquid c is freeze-dried.

Freeze-drying typically involves the following three steps in the chamber:

(A) a freezing stage;
(B) a primary drying stage; and
(C) a secondary drying stage.

Stage (A) is a stage of freezing the solvent in the concentrated raw material liquid c obtained in the first unit. In stage (B), the pressure in the chamber is reduced (for example, to 13.3 Pa (0.1 Torr) or less) and heat is applied to sublimate the frozen solvent. In stage (C), the temperature in the chamber is raised, and the solvent including the binding solvent, such as crystalline water, is removed until the residual solvent content drops to a desired level. In this manner, the concentrated raw material liquid c is further concentrated to obtain a product f. As a method of promoting solvent removal, a method of inflowing a dried gas may be used instead of decreasing the chamber pressure.

FIG. 2 shows a schematic view for detailing another example of the raw material liquid concentration system of the present embodiment, which comprises a first unit and a second unit.

The first unit and the second unit of the raw material liquid concentration system of FIG. 2 may be the same as the first unit and the second unit of the raw material liquid concentration system of FIG. 1, respectively. However, the raw material liquid concentration system of FIG. 2 has a circulation mechanism in which the concentrated raw material liquid obtained in the first unit is reused as the raw material liquid in the first unit. In this embodiment, for example, when the osmotic pressure of the concentrated raw material liquid obtained by passing the raw material liquid a through the first unit once does not reach a predetermined value, by passing at least a part of the concentrated raw material liquid through the first unit a plurality of times, there is an advantage in that a concentrated raw material liquid c having a predetermined osmotic pressure can be obtained.

In this case, the number of times the raw material liquid a is passed through the first unit (i.e., the number of times the concentrated raw material liquid obtained in the first unit is reused as the raw material liquid in the first unit) is arbitrary.

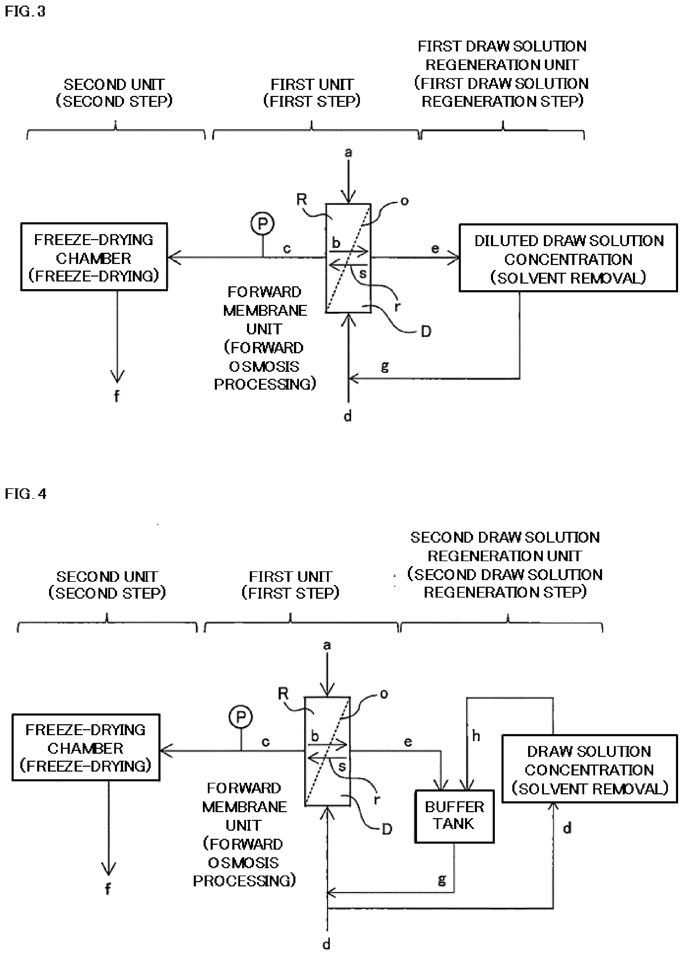

FIG. 3 shows a schematic view for detailing yet another example of the raw material liquid concentration system of the present embodiment, which comprises a first unit and a second unit.

The first unit and the second unit of the raw material liquid concentration system of FIG. 3 may be the same as the first unit and the second unit of the raw material liquid concentration system of FIG. 1, respectively. However, the raw material liquid concentration system of FIG. 3 further comprises a draw solution regeneration unit (first draw solution regeneration unit). In FIG. 3, the unit for carrying out the first draw solution regeneration step of the present embodiment is shown as the "first draw solution regeneration unit". As used herein, the "first draw solution regeneration step" can be replaced with the "first draw solution regeneration unit", and conversely, the "first draw solution regeneration unit" can be replaced with the "first draw solution regeneration step". The first draw solution regeneration unit may have a mechanism which concentrates by removing the solvent b from the diluted draw solution e obtained in the first unit to obtain a regenerated draw solution g, and recirculates the obtained regenerated draw solution g as the draw solution d. The removal of the solvent b from the diluted draw solution e may be carried out by a known concentration means such as, for example, an evaporation means.

Note that a part of solvent b may be included in the regenerated draw solution g. For example, when the solvent b is another component system containing water and the other component is an azeotropic component, it is difficult to remove the solvent b. Thus, a part of the solvent b is included in the regenerated draw solution g, but this does not pose a problem with the system.

FIG. 4 shows a schematic view for detailing yet another example of the raw material liquid concentration system of the present embodiment, which comprises a first unit and a second unit.

The first unit and the second unit of the raw material liquid concentration system of FIG. 4 may be the same as the first unit and the second unit of the raw material liquid concentration system of FIG. 1, respectively. However, the raw material liquid concentration system of FIG. 4 further comprises a draw solution regeneration unit (second draw solution regeneration unit) of an aspect different from that of the raw material liquid concentration system of FIG. 3. In FIG. 4, the unit for carrying out the second draw solution regeneration step of the present embodiment is shown as a "second draw solution regeneration unit." As used herein, the "second draw solution regeneration step" can be replaced with the "second draw solution regeneration unit", and conversely, the "second draw solution regeneration unit" can be replaced with the "second draw solution regeneration step." In the second draw solution reproduction unit of the raw material liquid concentration system of FIG. 4, first, the solvent b is removed from the draw solution d to obtain a concentrated draw solution h. Then, the second draw solution regeneration unit may have a function to mix the obtained concentrated draw solution h and the diluted draw solution e obtained in the first step to obtain a mixture (regenerated draw solution g), and use this regenerated draw solution g as a draw solution d. In this second draw solution regeneration unit, the removal of the solvent b from the draw solution d may be carried out by a known concentration means, for example, an evaporation means. The mixing of the concentrated draw solution h and the diluted draw solution e may be carried out, for example, in a buffer tank as shown in FIG. 4.

Note that a part of the solvent b may be included in the concentrated draw solution h. For example, when the solvent b is another component system containing water and the other component is an azeotropic component, it is difficult to remove the solvent b. Therefore, a part of the solvent b is included in the concentrated draw solution h, but this does not cause a problem for the system.

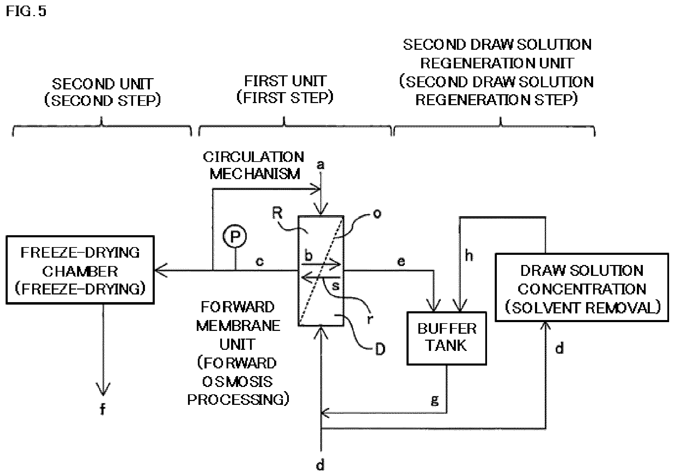

FIG. 5 shows a schematic view for detailing yet another example of the raw material liquid concentration system of the present embodiment, which comprises a first unit and a second unit.

The first unit and the second unit of the raw material liquid concentration system of FIG. 5 may be the same as the first unit and the second unit of the raw material liquid concentration system of FIG. 1, respectively. However, the raw material liquid concentration system of FIG. 5 further comprises, in an overlaid manner, the circulation mechanism shown in FIG. 2 and the second draw solution regeneration unit shown in FIG. 4.

In the raw material liquid concentration system of FIG. 5, in place of the second draw solution regeneration unit, the unit shown in FIG. 3 (first draw solution regeneration unit) may be used. Alternatively, the first draw solution regeneration unit and the second draw solution regeneration unit may be provided in an overlaid manner.

Note that a part of the solvent b may be included in the concentrated draw solution h. For example, when the solvent b is another component system containing water and the other component is an azeotropic component, it is difficult to remove the solvent b. Therefore, a part of the solvent b is included in the concentrated draw solution h, but this does not cause a problem for the system.

<<Each Element of Raw Material Liquid Concentration System>>

Subsequently, each element constituting the raw material liquid concentration system of the present embodiment will be described in detail below.

<Raw Material Liquid a>

The raw material liquid a is a fluid containing a solute and the solvent b, and is intended to be concentrated by the raw material liquid concentration system of the present embodiment. This raw material liquid a may be an emulsion as long as it is a fluid.

Examples of the raw material liquid a to be used in the present embodiment include foods; raw materials for pharmaceuticals; seawater; and accompanying water discharged from gas and oil fields, and among these, foods and raw materials for pharmaceuticals are preferable. In the raw material liquid concentration system of the present embodiment, a concentrate in which the solvent is removed can be obtained while the composition of the raw material liquid a is maintained substantially as-is. Thus, when the raw material liquid concentration system of the present embodiment is applied to the concentration of food, it is possible to achieve concentration with a reduced loss of aromatic components. When the system of the present embodiment is applied to the concentration of pharmaceutical raw materials, it becomes possible to carry out concentration while maintaining pharmaceutical efficacy.

Examples of the solute of the raw material liquid a used in the present embodiment include useful substances selected from the group consisting of sugars, amino acids, oligopeptides, enzymes, and nucleic acids. The solute of the raw material liquid is preferably a compound having a number average molecular weight of 100 to 6,000. Solutes with a molecular weight of less than 100 may permeate the forward osmosis membrane in the first unit. Solutes with a molecular weight exceeding 6,000 may adhere to the surface of the forward osmosis membrane. When the solute is a low molecular weight body having a molecular weight of 500 or less, the number average molecular weight thereof may be the molecular weight calculated from the structural formula. When the solute is a high molecular weight substance having a molecular weight exceeding 500, the number average molecular weight there may be a polyethylene oxide-equivalent number average molecular weight as measured by gel permeation chromatography.

Examples of food products which can be used in the raw material liquid concentration system of the present embodiment include coffee extract, fruit juice extracts (for example, orange juice, tomato juice, grapefruit, and lemon), alcoholic beverages (liquids containing ethanol, for example, wine, beer, and distilled liquors), dairy products (for example, lactic acid bacteria beverages, raw milk, and whey), soup stock (for example, kelp soup stock and bonito soup stock), tea extract, perfume emulsions (for example, emulsions such as vanilla essence and strawberry essence), syrups (for example maple syrup, coconut syrup, birch syrup, and honey), food oil emulsions (for example, olive oil, rapeseed oil, sunflower oil, safflower, corn and other emulsions), and vitamins.

Examples of sugars that can be concentrated in the raw material liquid concentration system of the present embodiment include compounds containing sugars in their molecular structures. Examples thereof include monosaccharides (for example, glucose, fructose, galactose, mannose, ribose, and deoxyribose), disaccharides (for example, maltose, sucrose, and lactose), sugar chains (for example, glucose, galactose, mannose, fucose, xylose, glucuronic acid, and isulonic acid; as well as sugar derivatives such as N-acetylglucosamine, N-acetylgalactosamine, and N-acetylneuraminic acid), complex oligosaccharides, heparin, erythropoetin, glycans, hyaluronic acid, albumin, ceramides, erythritol, trehalose, lipopolysaccharides, and cyclodextrin.

Examples of amino acids which can be concentrated in the raw material liquid concentration system of the present embodiment include essential amino acids (for example, tryptophan, lysine, methionine, phenylalanine, threonine, valine, leucine, and isoleucine), non-essential amino acids (for example, arginine, glycine, alanine, serine, tyrosine, cysteine, asparagine, glutamine, proline, aspartic acid, and glutamic acid), and non-natural amino acids. "Non-natural amino acid" refers to any non-naturally occurring artificial compound having an amino acid skeleton in the same molecule, which can be produced by binding various labeled compounds to the amino acid skeleton. The "amino acid skeleton" includes a carboxyl group, an amino group, and a portion connecting these groups in the amino acid. "Labeled compound" refers to dye compounds, fluorescent substances, chemical/bioluminescent substances, enzyme substrates, coenzymes, antigenic substances, and protein-binding substances known to a person skilled in the art.

Examples of non-natural amino acids include "labeled amino acids", which are amino acids which are bound to a labeled compound. Examples of labeled amino acids include amino acids in which a labeled compound is bound to an amino acid having an amino acid skeleton containing an aromatic ring such as a benzene ring in the side chain. Examples of non-natural amino acid to which a specific function is given include photoresponsive amino acids, photoswitch amino acids, fluorescent probe amino acids, and fluorescently-labeled amino acids.

Examples of oligopeptides which can be concentrated in the raw material liquid concentration system of the present embodiment include L-alanyl-L-glutamine, β-alanyl-L-histidine cyclosporine, and glutathione. As used herein, "oligopeptide" refers to a compound in which any amino acid having two or more residues and less than 50 residues is bound. The oligopeptide may be linear or cyclic.

Examples of nucleic acids which can be concentrated in the raw material liquid concentration system of the present embodiment include pharmaceuticals based on natural or chemically-modified nucleotides. Examples thereof include antisense oligonucleotides, RNAi, aptamers, and decoys.

<Draw Solution d>

The draw solution d contains a draw solute and preferably further contains the solvent b. The draw solution d is a fluid which has a higher osmotic pressure than the raw material liquid a and which does not significantly denature the forward osmosis membrane o.

<Draw Solute>

Examples of the draw solute which can be used in the present embodiment include inorganic salts, sugars, alcohols, and polymers. Thus, the draw solution of the present embodiment may be a solution containing one or more selected from inorganic salts, sugars, alcohols, and polymers. Among these, the draw solution of the present embodiment preferably contains, as the solute, one or more selected from the group consisting of inorganic salts and alcohols from the viewpoint of imparting a high osmotic pressure.

Examples of the inorganic salt include sodium chloride, potassium chloride, magnesium chloride, calcium chloride, sodium sulfate, magnesium sulfate, sodium thiosulfate, sodium sulfite, ammonium chloride, ammonium sulfate, ammonium carbonate;

>examples of sugars include general sugars such as sucrose, fructose and glucose, and special sugars such as oligosaccharides and rare sugars; and
>examples of alcohols include monoalcohols such as methanol, ethanol, 1-propanol and 2-propanol; and glycols such as ethylene glycol and propylene glycol. The alcohol is preferably one or two selected from the group consisting of ethanol and 2-propanol.

Examples of polymers include polymers such as polyethylene oxide and propylene oxide, and copolymers thereof.

The concentration of draw solute in draw solution d is set so that the osmotic pressure of draw solution d is higher than the osmotic pressure of raw material liquid a. The osmotic pressure of the draw solution d may fluctuate within the range as long as it is higher than the osmotic pressure of raw material liquid a.

To determine the difference in osmotic pressure between two liquids, for example, one of the following methods can be used.

>(1) When the two liquids are mixed and then separated into two phases: after the two phases are separated, it is judged that the osmotic pressure of the liquid with the larger volume is higher, or
>(2) when the two liquids are not separated into two phases after mixing: the two liquids are brought into contact with each other via the forward osmosis membrane o, and it is judged that the osmotic pressure of the liquid the volume of which has increased after a certain period of time is high. The fixed time at this time depends on the difference in osmotic pressure, but is generally in the range of several minutes to several hours.

<Solvent of Raw Material Liquid a>

The solvent b of the present embodiment may comprise, for example:

>water, and
>one or more selected from the group consisting of acetonitrile, methanol, and 2-propanol,
>and these preferably serve as primary components. The term "primary component" as used herein means that they are contained in the solvent b in a proportion of more than 50% by mass, 60% by mass or more, 80% by mass or more, 95% by mass or more, or 100% by mass.

When the solvent b of the raw material liquid a is a mixture of water and one or more selected from the group consisting of acetonitrile, methanol, and 2-propanol, it is preferable that the solvent b further contain an acid component and the pH of the solvent b be 1 to 4. The acid component is preferably one or two selected from the group consisting of acetic acid and trifluoroacetic acid.

(Solvent of Draw Solution d)

The solvent of the draw solution d of the present embodiment may be water.

<Concentrated Raw Material Liquid c>

In the concentrated raw material liquid c obtained by being concentrated by the first unit, the components in the raw material liquid a are maintained, and at least a part of the solvent b is selectively separated. In the raw material liquid concentration system of the present embodiment, the amount or proportion of the solvent b separated from the raw material liquid a can be arbitrarily controlled in the first unit.

In the first unit of the present embodiment, as long as the osmotic pressure of the raw material liquid a does not exceed the osmotic pressure of the draw solution d, it is possible to obtain a concentrated raw material liquid c concentrated to near the saturation concentration of the raw material liquid a. By feeding such concentrated raw material liquid c to the second unit, which is described later, it is possible to shorten the freeze-drying time in the second unit even when the amount of raw material liquid a is large.

In this manner, by carrying out the forward osmosis treatment in the first unit until the osmotic pressure of the raw material liquid a becomes sufficiently high, the freeze-drying process in the second unit can be made more efficient, and the time and energy load of the freeze-drying can be reduced.

In the first unit of the present embodiment, forward osmosis treatment is carried out. Thus, in the first unit, it is possible to obtain a high concentration ratio while maintaining a high degree of raw material liquid components. By changing the draw solute, an arbitrary concentration magnification can be obtained. From these facts, the types of raw material liquids which can be used in the raw material liquid concentration system of the present embodiment are various, and substantially any liquid can be concentrated. Among these, as described above, as the raw material liquid to which the raw material liquid concentration system of the present embodiment can be applied, foods and pharmaceutical raw materials are preferable. In the raw material liquid concentration system of the present embodiment, a concentrate in which the solvent is removed can be obtained while the composition of the raw material liquid a is maintained substantially as-is. Thus, when the raw material liquid concentration system of the present embodiment is applied to the concentration of foods, it is possible to achieve a concentrate with a reduced loss of aromatic components. When the system of the present embodiment is applied to the concentration of pharmaceutical raw materials, it becomes possible to concentrate while maintaining pharmaceutical efficacy.

<First Unit (First Step)>

In the first step of the raw material liquid concentration system of the present embodiment, forward osmosis treatment is carried out.

The forward osmosis treatment of the present embodiment may be carried out using, for example, a forward osmosis membrane unit, the internal space of which is divided into two parts, a raw material liquid-side space R and a draw solution-side space D, by the forward osmosis membrane o.

<Forward Osmosis Membrane o of Forward Osmosis Membrane Unit>

The forward osmosis membrane o of the forward osmosis membrane unit has a function that allows the solvent b in the raw material liquid a to permeate, but does not allow solute to permeate or is makes it difficult for solute to permeate, and has a function of back diffusing r the draw solute in the draw solution d of the concentrated raw material liquid c.

The forward osmosis membrane o used in the first unit of the raw material liquid concentration system of the present embodiment may be a membrane having a function as a reverse osmosis membrane. However, regarding the reverse osmosis treatment for removing the solvent by pressure and the forward osmosis treatment which utilizes the difference in osmotic pressure between the raw material liquid and the draw solution, the appropriate membrane structures thereof differ due to differences in the driving force used for solvent removal.

In a system in which a forward osmosis treatment is incorporated in a series of units, such as the raw material liquid concentration system of the present embodiment, it is preferable to use a membrane having a higher function as a forward osmosis membrane. A filter such as an ultrafiltration membrane (UF membrane) may be arranged during the process to separate 80% or more of the solute and the forward osmosis membrane may be used for the purpose of recovering the solute in the permeate.

Examples of the shape of the forward osmosis membrane o include a hollow fiber membrane shape and a flat membrane shape.

The forward osmosis membrane o is preferably a composite membrane having a separation active layer on a support layer (support membrane). The support membrane may be a flat membrane or a hollow fiber membrane. The support layer and the separation active layer may be composed of the same material or different materials.

When a flat membrane is used as the support membrane, the separation active layer may be provided on one side or both sides of the support membrane.

When a hollow fiber membrane is used as the support membrane, the separation active layer may be provided on the outer surface or inner surface of the hollow fiber membrane, or on both surfaces.

The support membrane of the present embodiment is a membrane for supporting the separation active layer, and it is preferable that the support membrane itself not substantially exhibit separation performance with respect to the object to be separated. As the support membrane, any known microporous support membrane or non-woven fabric can be used.

The preferable support membrane of the present embodiment is a microporous hollow fiber support membrane. The microporous hollow fiber support membrane has micropores having a pore diameter of preferably 0.001 $\mu$m to 2.0 $\mu$m, more preferably 0.005 $\mu$m to 1.0 $\mu$m, on the inner surface thereof. Conversely, regarding the structure from the inner surface of the microporous hollow fiber support membrane to the outer surface in the depth direction of the membrane, in order to reduce the permeation resistance of the permeating fluid, the structure should preferably be as sparse as possible while maintaining strength. The sparse structure of this portion is preferably, for example, a net-like structure, finger-like voids, or a mixed structure thereof.

As the separation active layer of the flat or hollow-fiber forward osmosis membrane o include, from the viewpoint of a high inhibition rate of draw solute, thin membrane layers comprising at least one selected from the group consisting of polysulfone, polyethersulfone, polyphenylene ether, polyvinylidene fluoride, polyacrylonitrile, polyethylene, polypropylene, polyamide, acetic acid cellulose, polyketone, polyetheretherketone, polyacrylonitrile, polyimine, polyimide, polybenzoxazole, polybenzimidazole, and perfluorosulfonic acid polymers as primary components are preferable. Among these, thin membrane layers comprising one or more selected from the group consisting of polyethersulfone, polysulfone, polyketone, polyetheretherketone, polyphenylene ether, polyvinylidene fluoride, polyacrylonitrile, polyimine, polyimide, polybenzoxazole, polybenzimidazole, perfluorosulfonic acid polymer, and polyamide as primary components are further preferable.

Further preferably, at least one selected from polysulfone, polyethersulfone, polyvinylidene fluoride, polyacrylonitrile, and polyamide as primary components, and a layer of polyamide is particularly preferable.

The polyamide of the separation active layer can be formed by interfacial polymerization of polyfunctional acid halides and polyfunctional aromatic amines.

Polyfunctional aromatic acid halides are aromatic acid halide compounds having two or more acid halide groups in one molecule. Specific examples thereof include trimesic acid halide, trimellitic acid halide, isophthalic acid halide, terephthalic acid halide, pyromellitic acid halide, benzophenone tetracarboxylic acid halide, biphenyldicarboxylic acid halide, naphthalenedicarboxylic acid halide, pyridinedicarboxylic acid halide, and benzenedisulfonic acid halide, and these can be used alone or in a mixture thereof. Examples of the halide ion in these aromatic acid halide compounds include a chloride ion, bromide ion, and iodide ion. In the present embodiment, in particular trimesic acid chloride alone, a mixture of trimesic acid chloride and isophthalic acid chloride, or a mixture of trimesic acid chloride and terephthalic acid chloride is preferably used.

Polyfunctional aromatic amines are aromatic amino compounds having two or more amino groups in one molecule. Specific examples thereof include m-phenylenediamine, p-phenylenediamine, 3,3'-diaminodiphenylmethane, 4,4'-diaminodiphenylamine, 4,4'-diaminodiphenyl ether, 3,4'-diaminodiphenyl ether, 3,3'-diaminodiphenylamine, 3,5-diaminobenzoic acid, 4,4'-diaminodiphenyl sulfone, 3,3'-diaminodiphenyl sulfone, 3,4'-diaminodiphenyl sulfone, 1,3,5-triaminobenzene, and 1,5-diaminonaphthalene, and these may be used alone or in a mixture thereof. In the present embodiment, in particular, one or more selected from m-phenylenediamine and p-phenylenediamine are preferably used.

Interfacial polymerization of polyfunctional acid halides and polyfunctional aromatic amines can be carried out according to a conventional method.

A perfluorosulfonic acid polymer generally refers to a polymer having a side chain having a sulfonic acid on a main chain skeleton in which a part or all of hydrogen is substituted with fluorine. Perfluorosulfonic acid polymers are used, for example, in chemically stable cation exchange resins, salt electrolysis as ion selective permeable membranes, polymer electrolyte fuel cells, water electrolysis, and various sensors and for example, are marketed in the form of a membrane or TM TM solution under trademarks such as Nafion (DuPont, Inc.), Aciplex (Asahi Kasei Chemicals TM Corporation), and Flemion (Asahi Glass Co., Ltd.).

The chemical structure of the perfluorosulfonic acid polymer is not particularly limited, and a polymer having a structure which is typically represented by formula (1) below can be used:

[Chem 1]

$$- (CF_2\text{-}CF_2)_{1\text{-}x}\text{-} (CF_2\text{-}CF\,(OY))_x\text{-} \qquad (1)$$

16

where Y = -(CF$_2$-CF(CF$_3$)-O-)$_m$-(CF$_2$)$_n$-SO$_3$H, x = 0.06 to 0.5, m is an integer of 0 to 2, and n is an integer from 1 to 6. Note that though the sequences of the "(CF$_2$-CF$_2$)" unit and the "(CF$_2$-CF (OY))" unit are described consecutively for convenience, they may be blocks, may be random, or may be a combination thereof.

In the present embodiment, it is preferable to use a hollow fiber forward osmosis membrane, and in particular, it is preferable to use a composite hollow fiber having a separation active layer composed of a polymer thin film for the inner surface of the porous support membrane of the hollow fiber.

As the forward osmosis membrane unit, it is preferable to use a unit in the form of a forward osmosis membrane module in which a plurality of forward osmosis membrane fiber bundles are preferably housed in a suitable housing.

The forward osmosis membrane as a hollow fiber membrane is preferably a membrane module having a hollow-fiber fiber bundle composed of a plurality of hollow fibers, wherein

the hollow fiber membrane comprises a microporous support membrane, and a high molecular weight polymer thin film separation active layer provided on an inner surface of the microporous support membrane, a total membrane area of the hollow fiber membrane including the hollow-fiber fiber bundle is 0.01 m$^2$ or more, and a coefficient of variation in thickness of the separation active layer in the radial direction and the longitudinal direction of the hollow-fiber fiber bundle as calculated by a method in which the mass of the separation active layer portion is measured in a scanning electron microscope image, in which a thickness direction cross-section of the separation active layer is captured, is 0 to 60%.

More preferably, the total of the membrane area of the hollow fiber membrane including the hollow-fiber fiber bundle is 1 m$^2$ or more.

In the present embodiment, the variation in the average thickness of the separation active layer at each location in the hollow fiber module of the composite hollow fiber membrane module is represented by a coefficient of variation. The coefficient of variation is a value obtained by dividing the standard deviation of the values at each measurement point by the average value, and is indicated by a percentage (%). Each measure location has an n number of 1 or more (the n number of each location is the same) for each of the nine locations in which both ends and the central portion of the module are taken for each of the three locations including the peripheral portion, the middle part, and the central portion of the radial direction of the module.

The thickness at each measure point is expressed as an average thickness in a measurement range having a length of about 5 to 100 μm. The length of this measurement range is preferably 5 to 50 μm, more preferably 5 to 20 μm, and most preferably 13 μm. The separation active layer of the composite hollow fiber membrane module of the present embodiment preferably has a fine concave/convex shape on the surface thereof, as will be described later. Thus, when evaluating the thickness of the separation active layer, it is appropriate to evaluate by the average thickness of the measurement range at each measurement point. The separation active layer of the composite hollow fiber membrane module of the present embodiment has small variations when the average thickness measured at a plurality of measurement points is compared. The direction of the length of the measurement range in the evaluation of the average thickness may be the longitudinal direction of the hollow fibers, the circumferential direction of the hollow fibers, or an oblique direction with respect to the longitudinal direction of the hollow fibers. The directions of the lengths of the measurement ranges in a plurality of scanning electron microscope images used for calculating the average value may be the same direction or different directions from each other.

The coefficient of variation of the average thickness of the separation active layer from the outermost circumference to the center of the hollow fibers of the composite hollow fiber membrane module in the present embodiment and the coefficient of variation of the average thickness of the separation active layer from one end to the other end of the hollow fibers of the module are preferably each 0 to 60%. These values are more preferably 0 to 50%, further preferably 0 to 40%, and most preferably is 0 to 30%.

The present inventors infer the mechanism by which the surface of the separation active layer of the composite hollow fiber membrane module of the present embodiment has such a fine concave shape as follows. However, the present invention is not bound by the following theory.

The separation active layer of the composite hollow fiber membrane module of the present embodiment is preferably formed by interfacial polymerization. In interfacial polymerization, when the liquid film of the first monomer solution formed on the surface of the hollow fibers comes into contact with the second monomer solution, it is considered that the two do not dissolve in each other and polymerization proceeds at the interface to form a polymerized layer. As a result, it is considered that the formed separation active layer has a shape with many fine concavities/protrusions on the surface thereof. If the separation active layer is formed by a method other than interfacial polymerization, it is not possible to form a separation active layer having a shape with many surface fine concavities/protrusions.

The permeation flux of the forward osmosis membrane o of the first unit regarding solvent b is preferably 0.15 L/(m$^2$ × hr) to 35 L/(m$^2$ × hr) as an initial permeation flow velocity at the start of the first step. Though the reason is not clear, if the initial permeation flux is 0.15 L/(m$^2$ × hr) or more, the separation efficiency of the solvent b is unlikely to be impaired. When this value is 35 L/(m$^2$ × hr) or less, it becomes easy to prevent the solute contained in the raw material liquid a from adhering to the surface of the forward osmosis membrane o, whereby a high concentration of concentrated raw material liquid c can be obtained without clogging the forward osmosis membrane o. As a result, it is possible to recover the solute while suppressing the loss of the solute in the raw material liquid a, and it is possible to shorten the freeze-dry processing time in the second unit.

The permeated flux regarding the solvent b as used herein means the amount of solvent b passing through the forward osmosis membrane o, which is allocated per unit area of the forward osmosis membrane o and per unit time, and is defined by formula (2) below.

$$F = L / (M \times H) \qquad (2)$$

F is the permeation flux (L/(m$^2$× hr)) regarding the solvent b, L is the volume (L) of the permeated solvent b, M is the surface area (m$^2$) of the forward osmosis membrane o, and H is the time (hr).

Permeation flux when the solvent b is water is commonly referred to as "water permeability", and for example, measurement thereof can be carried out using pure water as the treatment solution and 3.5% by mass saline solution as the draw solution.

The back diffusion rate of the draw solute s in the draw solution d by which the draw solute moves into the raw material liquid via the forward osmosis membrane o is preferably 200 g/(m$^2$ × hr) or less, and more preferably 0.001 g/(m$^2$ × hr) to 50 g/(m$^2$ × hr).

When this back diffusion rate is 200 g/(m$^2$ × hr) or less, it can be determined that the amount of draw solute to be moved in the raw material liquid is relatively small. In this case, it is possible to avoid lengthening the freeze-drying processing time, which is the second step. If the back diffusion of draw solute is excessive, the freeze-drying processing time will be long. The reason is not clear, but the present inventors speculate as follows.

The water in the concentrated raw material liquid is once turned into ice crystals and then sublimated and removed during freeze-dry processing. If the draw solute is present in the concentrated raw material liquid, the water around the draw solute is immobilized as nonfreezing water while remaining amorphous. Since it takes a long time to remove this immobilized nonfreezing water, it is presumed that the freeze-drying processing time becomes long when the back diffusion of draw solute is excessively large.

Conversely, if the back diffusion rate of this draw solutes is 0.001 g/(m$^2$ × hr) or more, the solute in the raw material liquid is less likely to foul on the membrane surface of the forward osmosis membrane o, and a high concentration of concentrated raw material liquid c can be obtained without clogging the forward osmosis membrane o. As a result, it is possible to recover the solute while suppressing the loss of the solute in the raw material liquid a, and it is possible to shorten the freeze-dry processing time in the second unit.

From the foregoing, from the viewpoint of efficient concentration, the back diffusion rate of draw solute is preferably 0.001 g/(m$^2$ × hr) to 50 g/(m$^2$ × hr).

As used herein, the back diffusion rate r means the amount of draw solute passing through the forward osmosis membrane o, which is allocated per unit area of the forward osmosis membrane o and per unit time, and is defined by the formula (3) below.

$$RF = g/(M \times H) \qquad (3)$$

RF is the permeation flux (g/(m$^2$× hr)) regarding the draw solution d, g is the amount of permeated draw solute (g), M is the surface area of forward osmosis membrane o (m$^2$), and H is time (hr).

The amount (g) of the draw solute moved to the raw material liquid-side space R is measured using an ICP-MS manufactured by Thermo Fisher Scientific Co., Ltd., type "iCAP Q." The permeation flux of the solution moved by driving is calculated from the formula (3).

<Introduction of Raw Material Liquid a and Draw Solution d into Forward Osmosis Membrane Unit>

The raw material liquid a, which is the concentration target, is introduced into the raw material liquid-side space R of the forward osmosis membrane unit, and the draw solution d is introduced into the draw solution-side space D. The direction of these flows may be countercurrent or parallel.

Though the flow rate of raw material liquid a introduced into the raw material liquid-side space R of the forward osmosis membrane unit is arbitrary, as a typical example, a range of 50 mL/(m$^2$·min) to 20,000 mL/(m$^2$·min) per minute per m$^2$ of the surface area of the forward osmosis membrane o of the forward osmosis membrane unit can be exemplified, and the flow rate is preferably 100 mL/(m$^2$·min) to 15,000 mL/(m$^2$·min).

In the first unit, when the raw material liquid a is circulated in the raw material liquid-side space R (inside the hollow fiber forward osmosis membrane), a pressure of 10 kPa to 200 kPa may be applied to the raw material liquid-side space R. This pressurization is preferable because the permeation flux of the forward osmosis membrane o regarding the solvent b can be increased thereby.

Though the flow rate of the draw solution d introduced into the draw solution-side space D of the forward osmosis membrane unit is arbitrary, a range of 100 mL/(m$^2$·min) to 5,000 mL/(m$^2$·min) can be exemplified, and it is preferable that the range be 500 mL/(m$^2$·min) to 2,000 mL/(m$^2$·min).

<Temperature of Raw Material Liquid a and Draw Solution d>

In the first step, the temperature of the raw material liquid a introduced into the raw material liquid-side space R of the forward osmosis membrane unit is preferably 3 °C to 60 °C, and more preferably 5 °C to 50 ° C. "Though the reason is not clear, a reduction in the permeation flow velocity can be avoided when the temperature of the raw material liquid a is 3 °C or higher, and it is possible to prevent some of the components in the raw material liquid a from being denatured when the temperature is 60 °C or lower.

The temperature of the draw solution d introduced into the draw solution-side space D of the forward osmosis membrane unit is preferably 5 °C to 60 °C, and more preferably 10 °C to 50 °C. Though the reason is not clear, when the temperature of the draw solution d is 5 °C to 60 °C, it is easy to avoid a large amount of draw solute moving from the draw solution d to the raw material liquid a via the forward osmosis membrane o.

<Second Unit (Second Step)>

In the second unit of the raw material liquid concentration system of the present embodiment, the concentrated raw material liquid c obtained in the first unit is freeze-dried to obtain a further concentrated product f.

Any known method may be used for freeze-drying in the raw material liquid concentration system of the present embodiment, and the typical process thereof is as described above.

<Draw Solution Regeneration Unit (Draw Solution Regeneration Step)>

The draw solution regeneration unit arbitrarily adopted in the raw material liquid concentration system of the present embodiment may be any of the following.

(1) A unit (first draw solution regeneration unit, for example, in the case of FIG. 3) in which the solvent b is removed from diluted draw solution e to obtain a regenerated draw solution g which is a concentrate of the diluted draw solution e, and the obtained regenerated draw solution g is used as the draw solution d, or
(2) a unit (second draw solution regeneration unit, for example, in the case of FIG. 4) in which the solvent b is removed from the raw solution d to obtain a concentrated draw solution h, which is a concentrate of the draw solution d, the obtained concentrated draw solution h and diluted draw solution e are mixed to obtain a mixture (regenerated draw solution g), and the obtained regenerated draw solution g is used as the draw solution d.

The removal of the solvent b from the diluted draw solution e in the first draw solution regeneration unit, and the removal of the solvent b from the draw solution d in the second draw solution regeneration unit may each be carried out by, for example, an evaporation means. As the evaporation means, for example, a distillation process, a forward osmosis process, or a membrane distillation process can be used.

The distillation process is a process in which the diluted draw solution e or draw solution d is adjusted to a predetermined temperature, is then charged into a distillation column to obtain the solvent b from the top of the column, and at the same time, from the bottom of the column, the regenerated draw solution g, which is a diluted draw solution from which the solvent b has been removed and which has been concentrated, or a concentrated draw solution h, which is a draw solution from which the solvent b has been removed and which has been concentrated, is obtained.

The forward osmosis process is a step in which the solvent b and the regenerated draw solution g or concentrated draw solution h are separated by adopting a configuration in which the diluted draw solution e or draw solution d is flowed so as to contact the forward osmosis membrane and passing the solvent b contained in the diluted draw solution e or draw solution d through the forward osmosis membrane to be removed.

The membrane distillation process is a method using a membrane unit having a separation chamber divided into a liquid phase portion and a gas phase portion by a water-repellent porous membrane. In this case, the diluted draw solution e or draw solution d is introduced into the liquid phase portion of the membrane unit for membrane distillation, and the gas phase portion is depressurized, whereby the solvent b contained in the diluted draw solution e or draw solution d passes from the liquid phase portion through the water-repellent porous membrane and moves to the gas phase portion under reduced pressure. As a result, the solvent b can be removed from diluted draw solution e or draw solution d to obtain the regenerated draw solution g or concentrated draw solution h.

As the process for regenerating the diluted draw solution, the forward osmosis process, which uses a forward osmosis membrane, or the membrane distillation process, which uses a water-repellent porous membrane, is preferable because the equipment size is small, and the membrane distillation process, which uses a water-repellent porous membrane, is further preferable because it can suppress the movement of the draw solute from the diluted draw solution e or draw solution d to the solvent b.

The elements used in the membrane distillation process will be described below.

<Water-Repellent Porous Membrane of Membrane Distillation Process>

Examples of the form of the water-repellent porous membrane used in the membrane distillation process include a hollow fiber membrane, a flat membrane, and a spiral membrane.

The flat membrane-like water-repellent porous membrane may be composed of, for example, a single layer, or may have a support layer and a separation active layer on the support layer. The hollow-fiber water-repellent porous membrane may be composed of, for example, hollow fibers composed of a single layer, or may have a hollow-fiber support layer and a separation active layer on the outer surface, the inner surface, or both surfaces of the support layer.

The material of the support layer and the separation active layer of the water-repellent porous membrane may be any material selected from the materials exemplified above regarding the forward osmosis membrane o of the first unit.

The permeation flux regarding the solvent b of the water-repellent porous membrane is preferably 1 L/(m$^2$ × hr) to 200 L/(m$^2$ × hr). When the permeation flux is 1 L/(m$^2$ × hr) or more, it becomes easy to avoid the case in which the efficient separation of the solvent b is impaired, and when it is 200 L/(m$^2$ × hr) or less, it becomes easy to avoid the case in which the amount of the draw solute which moves from the draw solution d through the water-repellent porous membrane to the solvent b becomes large.

The permeation flux is defined in the same manner as the permeation flux regarding the solvent b of forward osmosis membrane o of the first unit.

<Temperature of Diluted Draw Solution e or Draw Solution d Introduced into Membrane Distillation Process>

It is preferable that the temperature of the diluted draw solution e or draw solution d be adjusted to within the range of 20 °C to 90 °C prior to introduction into the liquid phase portion. When the temperature is 20 °C or higher, it becomes easy to avoid the case in which the efficiency of separation of the solvent b by membrane distillation is impaired, and when the temperature is 90 °C or lower, it becomes easy to avoid the case in which the amount of the draw solute contained in the diluted draw solution e or draw solution d increases through the water-repellent porous membrane and moves to the solvent b.

As a heat source for heating the diluted draw solution e or draw solution d, for example, a heat exchanger can be used, or exhaust heat from an industrial process can be used. It is preferable to use exhaust heat as the heat source because the amount of energy newly consumed for separating the solvent b can be reduced.

<Gas Phase Potion of Membrane Distillation Process>

The gas phase portion of the membrane unit for membrane distillation used in the membrane distillation process is preferably depressurized to a predetermined pressure. The pressure of the gas phase portion may be appropriately set in accordance with to the scale of the device, the concentration of the draw solution d, and the desired solvent b generation rate, but is preferably 0.1 kPa to 80 kPa, and is more preferably 1 kPa to 50 kPa.

Examples of the decompression device for depressurizing the gas phase portion of the membrane unit for membrane distillation include a diaphragm vacuum pump, a dry pump, an oil rotary vacuum pump, an ejector, and an aspirator.

<Product Obtained with Draw Solution Regeneration Unit>

According to the first draw solution regeneration unit, the solvent b is separated from the diluted draw solution e to become the concentrated draw solution g, which is a regenerated draw solution g, and is discharged from the membrane unit for membrane distillation. The obtained regenerated draw solution g can be reused as the draw solution d after being mixed with the diluted draw solution e and adjusted to a predetermined concentration as needed. When reusing the regenerated draw solution g, the temperature of the regenerated draw solution g may be adjusted using a cooling device.

According to the second draw solution regeneration unit, the solvent b is separated from the draw solution d to become a concentrated draw solution, which is the concentrated draw solution h, and is discharged from the membrane unit for membrane distillation. The obtained concentrated draw solution h is mixed with the diluted draw solution e and adjusted to a predetermined concentration to obtain the regenerated draw solution g. The regenerated draw solution g as-is can be reused as the draw solution d, or the mixture obtained by mixing the regenerated draw solution g with the draw solution can be reused as the draw solution d. When reusing the concentrated draw solution h, the temperature of the concentrated draw solution h may be adjusted using a cooling device.

As the cooling device described above, for example, a chiller or a heat exchanger can be used.

The solvent b separated from the draw solution d by these draw solution regeneration units may be reused as needed.

<Recovery Rate>

According to the raw material liquid concentration system of the present embodiment as described above, in the first unit, a highly-concentrated concentrated raw material liquid c can be obtained with high efficiency while substantially maintaining the composition of the component (solute) contained in the raw material liquid a. In the second unit, the concentrated raw material liquid c is freeze-dried to obtain a further concentrated product f.

In the concentrated raw material liquid f obtained in the first unit, the higher the degree to which the composition of the component contained in the raw material liquid a is maintained, the higher the recovery rate of the component (solute) contained in the raw material liquid in the product f obtained in the second unit.

The analysis of the solute in the obtained product f may be appropriately selected depending on the types of the components contained in the raw material liquid a and the concentrated raw material liquid c.

For example, various known analytical methods such as the gravimetric method, ICP-MS (inductively-coupled high-frequency plasma mass spectrometry), the nuclear magnetic-resonance spectroscopy (NMR) method, the gas chromatography mass spectrometry (GC/MS) method, the colorimetric method, the fluorescence method, and high-performance liquid chromatograph (HPLC) can be used.

In the raw material liquid concentration system of the present embodiment, the recovery rate of the solute in the product f obtained from the second unit can be set to 70% or more based on the amount of the solute in the raw material liquid a. When this recovery rate is 70% or more, it is possible to reduce product cost when concentrating the raw material liquid a containing expensive useful substances. In the raw material liquid concentration system of the present embodiment, the recovery rate of the solution in the product f can be 80% or more, 90% or more, and further 95% or more, which is from the viewpoint of product cost reduction. However, attempts to make the recovery rate of the solute of the product f excessively high incur excessive cost. From this point of view, in the raw material liquid concentration system of the present embodiment, the recovery rate of the solute of the product f may be maintained at 99.9% or less.

<Raw Material Liquid Concentration Method>

The raw material liquid concentration method of the present embodiment comprises:

a first step of obtaining a concentrated raw material liquid and a diluted draw solution by contacting a raw material liquid containing a solvent and a solute and a draw solution containing a draw solute via a forward osmosis membrane to move the solvent in the raw material liquid into the draw solution and move the draw solute in the draw solution into the raw material liquid, and
a second step of freeze-dry processing the concentrated raw material liquid to obtain a further concentrated product.

The raw material liquid concentration method of the present embodiment is carried out using the raw material liquid concentration system of the present embodiment described above.

As described above, in the present description, the step carried out by the first unit is referred to as the "first step", and the step carried out by the second unit of the present embodiment is referred to as the "second step." Thus, a person skilled in the art would appreciate that in the above descriptions of the first unit, the second unit, and the draw solution regeneration unit of the raw material liquid concentration system of the present embodiment, by replacing "unit" with "step", the details of the raw material liquid concentration method of the present embodiment can be understood.

EXAMPLES

The present invention will be specifically described below based on the Examples. However, the present invention is not limited by the Examples described below.

In the Examples and Comparative Examples below, the physical characteristics are measured by the following methods.

(1) Initial Permeation Flow Velocity (L/m²/hr)

The initial permeation flow velocity of the forward osmosis membrane regarding the solvent (initial permeation flow velocity of the forward osmosis membrane regarding solvent at the start of the first step) is measured by the following method.

The amount (L) of the solvent b permeated from the raw material liquid a to the draw solution is measured with an electronic balance (GX-12K) manufactured by A & D Co., Ltd., at one minute from the start of the operation. By substituting the measured value into formula (2), the initial permeation flux of the solvent moved by the operation can be calculated. The calculation results are shown in Table 1.

(2) Back Diffusion Rate of Draw Solute (g/m²/hr)

The back diffusion rate of the draw solute, by which the draw solute in the draw solution is moved into the raw material liquid, is measured by the following method.

After the operation is complete, the amount of the draw solute contained in the obtained concentrated raw material liquid is measured using an ICP-MS manufactured by Thermo Fisher Scientific Co., Ltd., type "iCAP Q". The measured value is substituted into formula (3) to calculate the permeation flux of the draw solute moved by the operation, and the obtained value is used as the back diffusion rate of the draw solute.

(3) Measurement of Scanning Electron Microscope Image, Average Thickness, and Coefficient Of Variation of Separation Active Layer

The composite hollow fiber membrane module obtained in each Example and Comparative Example is disassembled, and one hollow fiber is sampled from each of three locations of the center, a position at 50% of the radius, and the outermost circumference of the radial direction of the module. Each hollow fiber is divided into three equal parts in the longitudinal direction to obtain nine samples. Each of these hollow fiber samples is frozen and split to prepare a hollow fiber cross-section sample.

The samples were prepared by freezing and splitting as follows.

Each hollow fiber is immersed in ethanol (produced by Wako Pure Chemical Corporation), and encapsulated in a gelatin capsule No. 00 (manufactured by Wako Pure Chemical Corporation), and is then immersed in liquid nitrogen for 5 minutes and frozen. Each hollow fiber is then cut together with the frozen capsule using a chisel and a mallet. The obtained cut pieces are freeze-dried to obtain a hollow fiber cross-section sample for observation with a scanning electron microscope.

Scanning electron microscope observation is carried out on each of the above cross-section samples. The scanning electron microscopic observation is carried out using a model S-4800 manufactured by Hitachi, Ltd., under the conditions of an acceleration voltage of 1.0 kV, a WD of 5 mm reference ± 0.7 mm, and an emission current setting of 10 ± 1 μA. A microscope image is printed on paper with a printer, the separation active layer portion is cut out, and the mass is measured with a precision balance. This mass is converted into the thickness (μm) of the separation active layer by a calibration curve prepared in advance. The average value of the nine samples is used as the average thickness of the separation active layer, and the coefficient of variation is calculated.

Examples 1 to 22 and 33 were carried out using a raw material liquid concentration system having the configuration shown in FIG. 5. A circulation mechanism was used as needed. Specifically, in the first step, the raw material liquid a was concentrated to a predetermined concentration ratio while being circulated using a circulation mechanism as needed. However, when the back diffusion rate of the draw solution d exceeded 100 g/m²/hr, the operation was stopped after 13 hours. The circulation mechanism was not used when passage through the forward osmosis membrane unit only once was sufficient to achieve the predetermined concentration magnification.

<Example 1>

<<Production of Raw Material Liquid Concentration System>>

<Production of Forward Osmosis Membrane Unit Including Forward Osmosis Membrane o>

(1) Hollow Fiber Support Membrane Module Production

A 20% by mass hollow fiber spinning stock solution was prepared by dissolving polyether sulfone (PES: manufactured by BASF SE, trade name "Ultrason") in N-methyl-2-pyrrolidone (manufactured by Wako Pure Chemical Corporation). A wet hollow fiber spinning machine equipped with a double spinner was filled with the above stock solution which was extruded into a coagulation tank filled with water to form hollow fibers by phase separation. The obtained hollow fibers were wound on a winder. The outer diameters of the obtained hollow fibers were 1.0 mm, the inner diameters were 0.7 mm, the diameters of the micropores on the inner surface were 0.05 μm, and the water permeability was 1,020 kg/(m$^2$ × hr)/100 kPa.

These hollow fibers were used as the support layer.

A fiber bundle in which 130 support layers of hollow fibers were bundled was placed in a cylindrical plastic housing having a diameter of 2.2 cm and a length of 9.2 cm, and both ends thereof were affixed with an adhesive to prepare a hollow fiber support layer module having an effective membrane inner surface area of 0.023 m$^2$.

(2) Forward Osmosis Membrane Unit Production

100 g of m-phenylenediamine and 8 g of sodium lauryl sulfate were charged into a 10 L container, and 4,892 g of pure water was further added for dissolution to prepare 5 kg of a first solution used for interfacial polymerization.

8 g of trimesic acid chloride was charged into another 10 L container, and 3,992 g of n-hexane was added for dissolution to prepare 4 kg of a second solution used for interfacial polymerization.

The core side (inside of the hollow fibers) of the hollow fiber support layer module produced above was filled with the first solution, allowed to stand for 30 minutes, and then drained to form a thin liquid film of the first solution inside the hollow fibers. In this state, the second solution was filled in the core side at a flow rate of 100 mL/min for 3 minutes to carry out interfacial polymerization. The polymerization temperature was 25 ° C.

Next, nitrogen at 50 °C was flowed through the core side of the module for 30 minutes, n-hexane was evaporated and removed by nitrogen purging, and hot water at 85 °C was flowed through the core side of the module for 30 minutes to carry out hot water washing.

Then, the module was placed in an autoclave (manufactured by Tomy Seiko Co., Ltd., model number "ES-315"), and high-temperature steam at 121 °C was supplied to the core side of the module for 20 minutes to carry out high-temperature steam treatment. Both the core side and the shell side of the module were washed with water at 20 °C for 30 minutes to produce a forward osmosis membrane unit, which is a module of the hollow fiber forward osmosis membrane o having a separation active layer composed of polyamide (PA) on the inner surface of the hollow fiber support layer.

<Freeze-Drying Chamber>

A 100 mL eggplant-shaped flask was used as the freeze-drying chamber.

<Diluted Draw Solution Concentration Means>

(Production of Membrane Distillation Unit)

A membrane distillation unit prepared as follows was used as the diluted draw solution concentrate means in the draw solution regeneration step.

23 parts by mass of hydrophobic silica (AEROSIL-R972, manufactured by Nippon Aerosil Co., Ltd.) having an average primary particle size of 0.016 μm and a specific surface area of 110 m$^2$/g, 31 parts by mass of dioctyl phthalate (DOP), and 6 parts by mass of dibutyl phthalate (DBP) were mixed with a Henschel mixer, 40 parts by mass of polyvinylidene fluoride (manufactured by TM SOLVAY, Solef 6010) having a weight average molecular weight of 310,000 was added thereto, and the mixture was mixed again with the Henschel mixer. This mixture was mixed with a twin-screw kneading extruder and pelletized.

The obtained pellets were melt-kneaded at 240 °C with a twin-screw kneading extruder and extruded into hollow fibers to obtain hollow fibers. At this time, a hollow fiber-forming spinner was attached to the extrusion port in the head at the tip of the extruder, and the melt was extruded from the circular hole for extrusion of the melt on the extrusion surface to obtain an extrusion, and at the same time, nitrogen gas was discharged from the circular hole for discharging the hollow part forming fluid inside the ring hole for extruding the melt, which flowed into the hollow part of the extruded product, whereby extruded hollow fibers were obtained. The obtained hollow fiber extrusion product was introduced into a water bath (40 °C) at a distance of 20 cm and wound at a speed of 20 m/min.

The obtained hollow fiber extrusion was continuously drawn by a pair of first endless track belt pickers at a speed of 20 m/min, and passed through a first heating tank (0.8 m long) in which the spatial temperature was controlled to 40 °C. The extrusion was then picked up at a speed of 40 m/min by a second track-type belt picker similar to the first track-type belt picker, and stretched 2.0 times. Then, after passing through a second heating tank (0.8 m length) controlled to a spatial temperature of 80 °C, the mixture was cooled while being periodically bent on the water surface of a cooling water tank at 20 °C. It was then picked up at a speed of 30 m/min by a third endless track-type belt picker, the drawn fibers were contracted to 1.5 times, and then wound up with a skein having a circumference of about 3 m. Periodic bending on the water surface of the cooling water tank was carried out by continuously sandwiching the hollow fibers at a rotation speed of 170 rpm using a pair of uneven rollers having a circumference of about 0.20 m and four ridges.

The wound hollow fiber extrusion was immersed in methylene chloride to extract and remove the DOP and DBP in the hollow fiber extrusion, and then dried. Then, after immersing in a 50 mass% ethanol water solution, the silica in the hollow fiber extrusion was extracted and removed by immersion in a 5 mass% sodium hydroxide water solution at 40 °C for 1 hour. Washing with water and drying were then carried out to obtain hollow fibers. The outer diameters of the obtained hollow fibers were 1.25 mm, the inner diameters were 0.68 mm, and the diameters of the micropores on the inner surface were 0.1 $\mu$m. The hollow fibers were used as the water-repellent porous membrane for membrane distillation. A membrane distillation unit having an effective membrane inner surface area of 0.006 m$^2$ was prepared by filling 35 water-repellent porous membranes composed of the above hollow fibers into a cylindrical plastic housing having a diameter of 2.2 cm and a length of 9.2 cm, and affixing both ends with an adhesive.

<Raw Material Liquid>

In Example 1, concentration of an L-alanyl-L-glutamine aqueous solution was carried out.

The L-alanyl-L-glutamine aqueous solution as the raw material liquid a was prepared as follows.

10 g of commercially available L-alanyl-L-glutamine (white powder state, manufactured by Nacalai Tesque, Inc.) was dissolved in a mixed solvent of ion-exchanged water at 25 °C/acetonitrile = 85/15 (volume ratio), and to obtained 1 L of a 10 g/L L-alanyl-L-glutamine aqueous solution.

The allanyl glutamine aqueous solution described above was concentrated using the raw material liquid concentration system having the configuration shown in FIG. 5.

(1) First Step

In the raw material liquid concentration system shown in FIG. 5, the raw material liquid a (L-alanyl-L-glutamine aqueous solution) was flowed through the forward osmosis membrane unit of the first step at a flow rate of 130 mL/min, and the draw solution d was flowed at a flow rate of 150 mL/min. At this time, the temperature of the raw material liquid a was maintained at 25 °C, and filtration was carried out by the cross-flow method.

The draw solution d used was an aqueous solution containing 20% by mass of magnesium chloride as the draw substance.

(2) Second Step

In the second step in the raw material liquid concentration system shown in FIG. 5, freeze-dry processing was carried out by the following operations.

In each of four freeze-drying chambers (100 mL eggplant-shape flasks), 25 g of the concentrated raw material liquid c obtained in the first step was weighed and completely frozen in liquid nitrogen.

The four freezing chambers containing the frozen concentrated raw material liquid c were connected to a freeze-dryer using a multi-purpose tube and freeze-dried. Freeze-drying was carried out for 24 hours under the following conditions.

| | |
|---|---|
| Equipment used: | EYELA freeze-dryer FDU-2110, manufactured by Tokyo RikaKikai Co., Ltd. |
| Preliminary freezing method: | Freezing in liquid nitrogen |
| Vacuum degree: | Approximately 10 to 20 Pa |

(3) Draw Solution Regeneration Step

The membrane distillation unit prepared above was used in the draw solution regeneration step in order to maintained the induced concentration of the draw solution.

The draw solution d was flowed through the membrane distillation unit in the draw solution regeneration step at a flow rate of 100 cm$^3$/min, and the pressure at the gas phase of the membrane distillation unit was adjusted by a vacuum pump so that the absolute pressure is 10 kPa, and membrane distillation was carried out to obtain the concentrated draw solution h.

The diluted draw solution e obtained in the first step and the concentrated draw solution h obtained by membrane distillation were mixed in a buffer tank to prepare (regenerate) the draw solution d, and the obtained regenerated draw solution g was circulated and used in the first step.

(4) Evaluation Method

The obtained product f was evaluated as follows.

(4-1) Solvent Removal Rate in Second Step (Freeze-Drying)

The amount of water and the amount of acetonitrile contained in the obtained product f were measured with a Karl Fischer Moisture Measurement System (Metrome, model name "MATi10") and a GC/MS System (JEOL Ltd., model name "JMS-Q1000GC K9"), respectively.

First, GC/MS measurement was carried out. As a result, it was confirmed that there was no acetonitrile residue in the product f.

Next, measurement of the moisture content of the product f was carried out by Karl Fischer Measurement.

The amount of solvent contained in the concentrated raw material liquid c after the first step was calculated from the concentration of the raw material liquid a before the first step and the volume reduction rate of the raw material liquid before and after the first step.

The solvent removal rate in the second step (freeze-drying step) was calculated from the formula {(Amount of solvent contained in concentrated raw material liquid c - Moisture content of product f) / Amount of solvent contained in concentrated raw material liquid c} x 100, which was evaluated based on the criteria below. The results are shown in Table 1.

A: Solvent removal rate was 100%
B: Solvent removal rate was 95% to less than 100%
C: Solvent removal rate was 90% to less than 95%
D: Solvent removal rate was less than 90%

(Solute Recovery Rate)

Assuming that the solute recovery rate in the raw material liquid was 100%, the theoretical solution amount contained in the raw material liquid c after concentration was calculated from the concentration of the raw material liquid a before the first step and the volume reduction rate of raw material liquid before and after the first step.

Next, the mass of the product f after freeze-drying obtained in the second step was measured with a balance.

Then, the solute recovery rate after the first step and the second step was calculated from the formula {(Mass of product f - Water content of product f) / Theoretical solution amount} $\times$ 100, which was evaluated based on the following criteria. The results are shown in Table 1.

A: Solute recovery rate was 95% or more
B: Solute recovery rate was 90% to less than 95%
C: Solute recovery rate was 80% to less than 90%
D: Solute recovery rate was less than 80%

<Examples 2 to 8 and 16 to 22>

Concentration of the raw material liquid a was carried out in the same manner as Example 1, except that the type of solute contained in raw material liquid a, the type and concentration of the draw solute contained in the draw solution d, and the type of the solvent b were changed as shown in Table 1, and evaluation was carried out. The results are shown in Table 1.

In Table 1, the term "aq." under solvent column of the raw material liquid a and the draw solution section indicates "aqueous solution."

Note that in Examples 4 to 7, the first step was carried out by applying the pressures shown in Table 1 from the core side to the shell side (from the inside to the outside of the hollow fiber forward osmosis membrane) of the forward osmosis membrane unit.

The raw material liquid a containing the freeze-dried tea extract powder of Example 20 was prepared as follows.

10 g of freeze-dried tea extract powder was placed in a SUS304 airtight container having a capacity of 3.0 L, 1 L of distilled water was added thereto, and the solution obtained by stirring for 30 minutes was used as the raw material liquid a.

<Example 9>

A forward osmosis membrane module was prepared and concentration of the raw material liquid a was carried out in the same manner as Example 1 except that the "(2) Forward Osmosis Membrane Unit Production" was carried out as follows, and evaluation was carried out. The results are shown in Table 1.

(2) Forward Osmosis Membrane Unit Production

10 g of m-phenylenediamine and 0.8 g of sodium lauryl sulfate were charged into a 0.5 L container, and 489.2 g of pure water was further added for dissolution to prepare 0.5 kg of a first solution used for interfacial polymerization.
0.8 g of trimesic acid chloride was charged into another 0.5 L container, and 399.2 g of n-hexane was added for dissolution to prepare 0.4 kg of a second solution used for interfacial polymerization.
The core side (inside of the hollow fibers) of a hollow fiber support layer module produced in the same manner as Example 1 was filled with the first solution, allowed to stand for 30 minutes, and then drained to form a thin liquid film of the first solution inside the hollow fibers.
Next, the core side pressure was set to normal pressure, and the shell side pressure was set to a reduced pressure of 10 kPa as an absolute pressure. After allowing to stand for 30 minutes in this state, the second solution was filled in the core side at a flow rate of 1.5 L/min for 3 minutes while maintaining this pressure to carry out interfacial polymerization. The polymerization temperature was 25 °C.
Then, nitrogen purging with nitrogen at 50 °C, hot water washing with hot water at 85 °C, high-temperature steam treatment with high-temperature steam at 121 °C, and water washing treatment with water at 20 °C were carried out in the same manner as in Example 1.
A forward osmosis membrane unit, which is a module of the hollow fiber forward osmosis membrane o having a separation active layer composed of polyamide on the inner surface of the hollow fiber support layer, was prepared by carrying out a pressure treatment of pressurizing the shell side (outside of the hollow fibers) of the module at a pressure of 100 KPa, and then washing both the shell side and the core side with pure water.

<Example 10>

A forward osmosis membrane module was produced in the same manner as Example 9, except that in the "(2) Forward Osmosis Membrane Unit Production", the temperature of the hot water for washing with hot water after nitrogen purging was set to 90 °C, the temperature of the high-temperature water container for high-temperature steam treatment was set to 131 °C, and the pressure treatment on the shell side was not carried out.
Using the obtained forward osmosis membrane module, the raw material liquid a was concentrated and evaluated in the same manner as in Example 2. The results are shown in Table 1.

<Example 11>

A forward osmosis membrane module was prepared and concentration of the raw material liquid a was carried out in the same manner as Example 1 except that the "(2) Forward Osmosis Membrane Unit Production" was carried out as follows, and evaluation was carried out. The results are shown in Table 1.

(2) Forward Osmosis Membrane Unit Production

In the same manner as in Example 1, interfacial polymerization of polyamide was carried out on the core side (inside of the hollow fibers) of the module of the hollow fiber support layer.
Next, nitrogen at 50 °C was flowed through the core side of the module for 30 minutes to evaporate and remove the n-hexane, and then both the shell side and the core side were washed with pure water.
Acetic acid treatment was carried out by injecting an acetic acid aqueous solution (pH = 2) at 45 °C into the inside of the module (both the core side and the shell side) and immersing the polyamide obtained by interfacial polymerization in the acetic acid aqueous solution for 1 hour. After 1 hour, the acetic acid aqueous solution was removed from the module, which was then washed to produce a forward osmosis membrane unit, which is a module of the hollow fiber forward osmosis membrane o having a separation active layer composed of polyamide immersed in acetic acid aqueous solution on the inner surface of the hollow fiber support layer.

<Example 12>

A forward osmosis membrane module was produced in the same manner as Example 9, except that in the "(2) Forward Osmosis Membrane Unit Production", the temperature of the hot water for washing with hot water after nitrogen purging was set to 100 °C, the temperature of the high-temperature water container for high-temperature steam treatment was set to 141 °C, and the pressure treatment on the shell side was not carried out.

Using the obtained forward osmosis membrane module, the raw material liquid a was concentrated and evaluated in the same manner as in Example 2. The results are shown in Table 1.

<Example 13>

A forward osmosis membrane module was prepared in the same manner as in Example 11, except that in the "(2) Forward Osmosis Membrane Unit Production", the temperature of the acetic acid aqueous solution (pH = 2) used for the acetic acid treatment was set to 60 °C.

Using the obtained forward osmosis membrane module, the raw material liquid a was concentrated and evaluated in the same manner as in Example 1. The results are shown in Table 1.

<Example 14>

A hollow fiber support membrane module was produced and a forward osmosis membrane unit using the same was produced in the same manner as Example 1, except that in the "(1) Hollow Fiber Support Membrane Module Production", hollow fibers composed of polysulfone (PS) were used as the hollow fiber support membrane.

Using the obtained forward osmosis membrane module, the raw material liquid a was concentrated and evaluated in the same manner as in Example 2. The results are shown in Table 1.

The hollow fiber support membrane module containing the hollow fibers composed of polysulfone was produced as follows.

(1) Hollow Fiber Support Membrane Module Production

A hollow fiber spinning stock solution having a polymer concentration of 19% by mass was prepared by dissolving polysulfone (P-3500 produced by Solvay) in N-methyl-2-pyrrolidone (manufactured by Wako Pure Chemical Corporation). A wet hollow fiber spinning machine equipped with a double spinner was filled with the above stock solution which was extruded into a coagulation tank filled with water to form hollow fibers by phase separation. The obtained hollow fibers were wound on a winder. The outer diameters of the obtained hollow fibers were 1.00 mm, and the inner diameters were 0.70 mm.

These hollow fibers were used as the support layer.

130 support layers of these hollow fibers were placed in a cylindrical plastic housing having a diameter of 2 cm and a length of 10 cm, and both ends thereof were affixed with an adhesive to prepare a hollow fiber support layer module having an effective membrane inner surface area of 0.023 m$^2$.

<Example 15>

A hollow fiber support membrane module was produced and a forward osmosis membrane unit using the same was produced in the same manner as Example 1, except that in the "(1) Hollow Fiber Support Membrane Module Production", hollow fibers composed of polyketone (PK) were used as the hollow fiber support membrane.

Using the obtained forward osmosis membrane module, the raw material liquid a was concentrated and evaluated in the same manner as in Example 2. The results are shown in Table 1.

The hollow fiber support membrane module containing the hollow fibers composed of polyketone was produced as follows.

(1) Hollow Fiber Support Membrane Module Production

A polyketone having an intrinsic viscosity of 3.4 dl/g, in which ethylene and carbon monoxide were completely alternately copolymerized, was added to a 65 mass% resorcin aqueous solution, and the mixture was stirred and dissolved at 80 °C for 2 hours and defoamed to obtain a uniform transparent hollow fiber spinning stock solution having a polymer concentration of 10.7% by mass.

A wet hollow fiber spinning machine equipped with a double spinner was filled with the above stock solution. The stock solution adjusted to 50 °C was extruded into a coagulation tank filled with water to form hollow fibers by phase separation. The obtained hollow fibers were wound on a winder. The outer diameters of the obtained hollow fibers were 1.0 mm, the inner diameters were 0.7 mm, and the diameters of the micropores on the inner surface thereof were 0.15 μm.

These hollow fibers were used as the support layer.

130 support layers of these hollow fibers were placed in a cylindrical plastic housing having a diameter of 2 cm and a length of 10 cm, and both ends thereof were affixed with an adhesive to prepare a hollow fiber support layer module having an effective membrane inner surface area of 0.023 $m^2$.

Examples 23 to 32 were carried out using a raw material liquid concentration system having the structure shown in FIG. 2. A circulation mechanism was used as needed. Specifically, in the first step, the raw material liquid a was concentrated to a predetermined concentration ratio while being circulated using a circulation mechanism as needed. However, when the back diffusion rate of the draw solution d exceeded 100 $g/m^2/hr$, the operation was stopped after 13 hours. The circulation mechanism was not used when passage through the forward osmosis membrane unit only once was sufficient to achieve the predetermined concentration magnification.

<Example 23>

A forward osmosis membrane unit, in the first step, and a freeze-drying unit, in the second step, identical to those used in Example 1 were used.

The raw material liquid a was concentrated and evaluated in the same manner as in Example 1 except that 2-propanol was used as the draw solution and the draw solution regeneration step was not carried out. The results are shown in Table 1.

<Examples 24 to 32>

The raw material liquid was concentrated and evaluated in the same manner as in Example 23 except that the type and concentration of the draw solute contained in the draw solution d and the type of the solvent b were changed as shown in Table 1. The results are shown in Table 1.

In Examples 29 and 30, in "(4-1) Solvent Removal Rate in Second Step (Freeze-Drying)" of the evaluation, the amounts of methanol and 2-propanol contained in the obtained product f were measured with a GC/MS system (manufactured by JEOL Ltd., model name "JMS-Q1000GC K9"). As a result, methanol was not detected in the product f of Example 29, and 2-propanol was not detected in the product f of Example 30.

Thus, in "(4-1) Solvent Removal Rate in Second Step (Freeze-Drying)", the solvent removal rate was calculated based on the amount of water in the product f in the same manner as Example 1.

The trifluoroacetic acid (TFA) of Example 31 and the acetic acid of Example 32 were quantified by ion chromatography.

<Example 33>

Example 33 was carried out using a raw material liquid concentration system having the structure shown in FIG. 2.

As the forward osmosis membrane unit, a forward osmosis membrane module produced by using a hollow fiber support membrane module having an effective membrane area of 1.65 $m^2$ was used.

As the diluted draw solution concentration means, a membrane distillation unit having an effective membrane area of 7.5 $m^2$ was used.

The freeze-drying chamber used was the same as in Example 1.

The forward osmosis membrane module and the membrane distillation unit were produced as follows.

<Production of Forward Osmosis Membrane Unit Including Forward Osmosis Membrane o>

(1) Hollow Fiber Support Membrane Module Production

Hollow fibers obtained in the same manner as Example 1 were used as the support membrane.

A fiber bundle of 1,750 hollow fiber support membranes was placed in a cylindrical plastic housing having a diameter of 5.5 cm and a length of 50 cm, and both ends thereof were affixed with an adhesive to prepare a hollow fiber support membrane module having an effective membrane inner surface area of 1.65 $m^2$.

(2) Forward Osmosis Membrane Unit Production

A forward osmosis membrane unit, which is a module of the hollow fiber forward osmosis membrane o having a separation active layer composed of polyamide on the inner surface of the hollow fiber support layer, was produced in the same manner as in Example 1, except that the hollow fiber support membrane module obtained above was used, and after forming a thin liquid film of the first solution inside the hollow fiber, the flow rate when flowing the second solution through the core side was set to 1.75 L/min.

<Diluted Draw Solution Concentration Means>

(Production of Membrane Distillation Unit)

In the same manner as in Example 1, 4,700 semipermeable membranes composed of hollow fibers having an outer diameter of 1.25 mm, an inner diameter of 0.68 mm, and a micropore diameter of 0.1 μm on the inner surface thereof were placed in a cylindrical plastic housing having a diameter of 13 cm and a length of 75 cm, and both ends thereof were affixed with an adhesive

Using the raw material liquid concentration system having the above structure, concentration of a raw material liquid a (L-alanyl-L-glutamine aqueous solution) was carried out.

The first step was carried out in the same manner as in Example 1 except that the supply flow rate of the raw material liquid a to the forward osmosis membrane unit prepared as described above was set to 2 L/min and the supply flow rate of the draw solution d was set to 7 L/min.

In the second step, the same method as in Example 1 was used.

The draw solution regeneration step was carried out in the same manner as in Example 1 except that the membrane distillation unit prepared as described above was used and the supply flow rate of the diluted draw solution e was set to 4 L/min.

Table 1 shows the results of the evaluation carried out by the same method as in Example 1.

<Comparative Example 1>

The raw material liquid a was concentrated and evaluated in the same manner as in Example 1 except that an ultrafiltration device was used instead of the first step.

The treatment was carried out by a cross-flow filtration method under the conditions of a linear velocity of 100 cm/s, an operating temperature of 25 °C, and an intermembrane differential TM pressure (TMP) of approximately 0.05 MPa using a Hydrosart/Sartocon Slice Cassette (exclusion limit molecular weight: 10K, membrane area: 0.1 m², material: regenerated cellulose membrane, manufactured by Sartorius AG, composed of polyether sulfone (PES)) attached to a membrane holder (Sartcon Slice Holder, manufactured by Sartorius AG) as the ultrafiltration membrane and using a pump (Rikiport NE1.300, manufactured by KNF).

<Comparative Example 2>

Concentration of the raw material liquid a and evaluation were carried out in the same manner as Comparative Example 1 except that the reverse osmosis membrane method was used in place of the first step.

The reverse osmosis membrane was operated at a linear speed of 10 cm/s, an operating temperature of 25 °C, and an operating pressure of 3.0 MPa using the product "NTR-759HR" manufactured by Nitto Denko Corporation, which is composed of polyester sulfone (PES)). The results are shown in Table 2.

<Comparative Example 3>

Concentration of the raw material liquid a and evaluation were carried out in the same manner as Comparative Example 1, except that a distillation column incorporating a vacuum system was used in place of the first step, and vacuum distillation was carried out at 70 °C and 10.7 to 13.3 kPa (80 to 100 Torr). The results are shown in Table 2.

[Table 1]

Table 1

| Ex | First Step (Forward Osmosis Membrane Module) | | | | | | |
|----|------------------|------------------|----------|------------------|-----------|----------|------------------|
| | Hollow Fiber Support Membrane | | Separation Active Layer | | Operation Conditions | | |
| | Material | Membrane Area [m²] | Material | Average Thickness Variation Coefficient [%] | Operating Temperature [°C] | Pressure [kPa] | Concentration Ratio (times) |
| 1 | PES | 0.023 | PA | 30 | 25 | - | 10 |

(continued)

| Ex | First Step (Forward Osmosis Membrane Module) | | | | | | |
| | Hollow Fiber Support Membrane | | Separation Active Layer | | Operation Conditions | | |
| | Material | Membrane Area [m$^2$] | Material | Average Thickness Variation Coefficient [%] | Operating Temperature [°C] | Pressure [kPa] | Concentration Ratio (times) |
|---|---|---|---|---|---|---|---|
| 2 | PES | 0.023 | PA | 30 | 25 | - | 10 |
| 3 | PES | 0.023 | PA | 30 | 25 | - | 10 |
| 4 | PES | 0.023 | PA | 30 | 25 | 100 | 10 |
| 5 | PES | 0.023 | PA | 30 | 25 | 100 | 10 |
| 6 | PES | 0.023 | PA | 30 | 25 | 10 | 10 |
| 7 | PES | 0.023 | PA | 30 | 25 | 200 | 10 |
| 8 | PES | 0.023 | PA | 30 | 25 | - | 2 |
| 9 | PES | 0.023 | PA | 30 | 25 | - | 10 |
| 10 | PES | 0.023 | PA | 30 | 25 | - | 10 |
| 11 | PES | 0.023 | PA | 30 | 25 | - | 10 |

[Table 2]

TABLE 1 (continuation)

| Ex | First Step (Forward Osmosis Membrane Module) | | | | | | |
| | Hollow Fiber Support Membrane | | Separation Active Layer | | Operation Conditions | | |
| | Material | Membrane Area [m$^2$] | Material | Average Thickness Variation Coefficient [%] | Operating Temperature [°C] | Pressure [kPa] | Concentration Ratio (times) |
|---|---|---|---|---|---|---|---|
| 12 | PES | 0.023 | PA | 30 | 25 | - | 5 |
| 13 | PES | 0.023 | PA | 30 | 25 | - | 10 |
| 14 | PS | 0.023 | PA | 30 | 25 | - | 10 |
| 15 | PK | 0.023 | PA | 30 | 25 | - | 10 |
| 16 | PES | 0.023 | PA | 30 | 25 | - | 10 |
| 17 | PES | 0.023 | PA | 30 | 25 | - | 10 |
| 18 | PES | 0.023 | PA | 30 | 25 | - | 10 |
| 19 | PES | 0.023 | PA | 30 | 25 | - | 10 |
| 20 | PES | 0.023 | PA | 30 | 25 | - | 10 |
| 21 | PES | 0.023 | PA | 30 | 25 | - | 10 |
| 22 | PES | 0.023 | PA | 30 | 25 | - | 10 |

[Table 3]

TABLE 1 (continuation)

| Ex | First Step (Forward Osmosis Membrane Module) | | | | | | |
|----|------|------|------|------|------|------|------|
| | Hollow Fiber Support Membrane | | Separation Active Layer | | Operation Conditions | | |
| | Material | Membrane Area [m$^2$] | Material | Average Thickness Variation Coefficient [%] | Operating Temperature [°C] | Pressure [kPa] | Concentration Ratio (times) |
| 23 | PES | 0.023 | PA | 30 | 25 | - | 10 |
| 24 | PES | 0.023 | PA | 30 | 25 | - | 10 |
| 25 | PES | 0.023 | PA | 30 | 25 | - | 10 |
| 26 | PES | 0.023 | PA | 30 | 25 | - | 10 |
| 27 | PES | 0.023 | PA | 30 | 50 | - | 10 |
| 28 | PES | 0.023 | PA | 30 | 5 | - | 10 |
| 29 | PES | 0.023 | PA | 30 | 25 | - | 10 |
| 30 | PES | 0.023 | PA | 30 | 25 | - | 10 |
| 31 | PES | 0.023 | PA | 30 | 25 | - | 10 |
| 32 | PES | 0.023 | PA | 30 | 25 | - | 10 |
| 33 | PES | 1.65 | PA | 30 | 25 | - | 10 |

[Table 4]

TABLE 1 (continuation)

| Ex | Raw Material Liquid a | | Draw Solution | Evaluation Results | | | |
|----|------|------|------|------|------|------|------|
| | Solute | Solvent | | Initial Permeation (Flux) [kg/m$^2$/hr] | Back Diffusion [g/m$^2$/hr] | Solvent Removal Rate | Solute Recovery Rate |
| 1 | L-alanyl-L-glutamine | 15 wt% acetonitrile aq. | 20 wt% MgCl$_2$ aq. | 7 | 0.14 | A | A |
| 2 | L-alanyl-L-glutamine | 15 wt% acetonitrile aq. | 10 wt% MgCl$_2$ aq. | 4 | 0.06 | A | A |
| 3 | L-alanyl-L-glutamine | Water | 10 wt% MgCl$_2$ aq. | 7 | 0.042 | A | A |
| 4 | L-alanyl-L-glutamine | Water | 10 wt% MgCl$_2$ aq. | 8 | 0.001 | A | A |
| 5 | L-alanyl-L-glutamine | 15 wt% acetonitrile aq. | 10 wt% MgCl$_2$ aq. | 5 | 0.025 | A | A |

(continued)

| Ex | Raw Material Liquid a | | Draw Solution | Evaluation Results | | | |
|---|---|---|---|---|---|---|---|
| | Solute | Solvent | | Initial Permeation (Flux) [kg/m$^2$/hr] | Back Diffusion [g/m$^2$/hr] | Solvent Removal Rate | Solute Recovery Rate |
| 6 | L-alanyl-L-glutamine | 15 wt% acetonitrile aq. | 10 wt% MgCl$_2$ aq. | 5 | 0.065 | A | A |
| 7 | L-alanyl-L-glutamine | 15 wt% acetonitrile aq. | 10 wt% MgCl$_2$ aq. | 6 | 0.054 | A | A |
| 8 | L-alanyl-L-glutamine | 15 wt% acetonitrile aq. | 50 wt% sucrose aq. | 2 | 0 | D | C |
| 9 | L-alanyl-L-glutamine | 15 wt% acetonitrile aq. | 20 wt% MgCl$_2$ aq. | 20 | 220 | D | A |
| 10 | L-alanyl-L-glutamine | 15 wt% acetonitrile aq. | 10 wt% MgCl$_2$ aq. | 0.15 | 0.03 | A | A |
| 11 | L-alanyl-L-glutamine | 15 wt% acetonitrile aq. | 20 wt% MgCl$_2$ aq. | 35 | 30 | A | A |

[Table 5]

TABLE 1 (continuation)

| Ex | Raw Material Liquid a | | Draw Solution | Evaluation Results | | | |
|---|---|---|---|---|---|---|---|
| | Solute | Solvent | | Initial Permeation (Flux) [kg/m$^2$/hr] | Back Diffusion [g/m$^2$/hr] | Solvent Removal Rate | Solute Recovery Rate |
| 12 | L-alanyl-L-glutamine | 15 wt% acetonitrile aq. | 10 wt% MgCl$_2$ aq. | 0.10 | 0.02 | C | B |
| 13 | L-alanyl-L-glutamine | 15 wt% acetonitrile aq. | 20 wt% MgCl$_2$ aq. | 43 | 92 | B | B |
| 14 | L-alanyl-L-glutamine | 15 wt% acetonitrile aq. | 10 wt% MgCl$_2$ aq. | 3 | 0.06 | A | A |
| 15 | L-alanyl-L-glutamine | 15 wt% acetonitrile aq. | 10 wt% MgCl$_2$ aq. | 5 | 0.05 | A | A |
| 16 | White Sugar (nucleic acid) | 15 wt% acetonitrile aq. | 20 wt% MgCl$_2$ aq. | 8 | 0.15 | A | A |

(continued)

| Ex | Raw Material Liquid a | | Draw Solution | Evaluation Results | | | |
|---|---|---|---|---|---|---|---|
| | Solute | Solvent | | Initial Permeation (Flux) [kg/m$^2$/hr] | Back Diffusion [g/m$^2$/hr] | Solvent Removal Rate | Solute Recovery Rate |
| 17 | Amylase (enzyme) | 15 wt% acetonitrile aq. | 20 wt% $MgCl_2$ aq. | 7 | 0.14 | A | A |
| 18 | Sucrose | 15 wt% acetonitrile aq. | 20 wt% $MgCl_2$ aq. | 7 | 0.15 | A | A |
| 19 | Asparagine | 15 wt% acetonitrile aq. | 20 wt% $MgCl_2$ aq. | 7 | 0.15 | A | A |
| 20 | Freeze-Dried Powder of Tea Extract | Water | 20 wt% $MgCl_2$ aq. | 6 | 0.12 | A | A |
| 21 | L-alanyl- L-glutamine | 15 wt% acetonitrile aq. | 20 wt% $MgCl_2$ aq. | 5 | 0.10 | A | A |
| 22 | L-alanyl- L-glutamine | 15 wt% acetonitrile aq. | 20 wt% $MgCl_2$ aq. | 7 | 0.21 | A | A |

[Table 6]

TABLE 1 (continuation)

| Ex | Raw Material Liquid a | | Draw Solution | Evaluation Results | | | |
|---|---|---|---|---|---|---|---|
| | Solute | Solvent | | Initial Permeation (Flux) [kg/m$^2$/hr] | Back Diffusion [g/m$^2$/hr] | Solvent Removal Rate | Solute Recovery Rate |
| 23 | L-alanyl-L-glutamine | 15 wt% acetonitrile aq. | 2-propanol | 5 | 22 | A | A |
| 24 | L-alanyl-L-glutamine | 15 wt% acetonitrile aq. | ethanol | 5 | 35 | A | A |
| 25 | L-alanyl-L-glutamine | 15 wt% acetonitrile aq. | 50 wt% 2-propanol aq. | 4 | 18 | A | A |
| 26 | L-alanyl-L-glutamine | 15 wt% acetonitrile aq. | 50 wt% ethanol aq. | 4 | 30 | A | A |
| 27 | L-alanyl-L-glutamine | 15 wt% acetonitrile aq. | 20 wt% $MgCl_2$ aq. | 10 | 0.3 | A | A |

(continued)

| Ex | Raw Material Liquid a | | Draw Solution | Evaluation Results | | | |
|---|---|---|---|---|---|---|---|
| | Solute | Solvent | | Initial Permeation (Flux) [kg/m$^2$/hr] | Back Diffusion [g/m$^2$/hr] | Solvent Removal Rate | Solute Recovery Rate |
| 28 | L-alanyl-L-glutamine | 15 wt% acetonitrile aq. | 20 wt% MgCl$_2$ aq. | 3 | 0.04 | A | A |
| 29 | L-alanyl-L-glutamine | 10 wt% methanol aq. | 20 wt% MgCl$_2$ aq. | 8 | 0.13 | A | A |
| 30 | L-alanyl-L-glutamine | 10 wt% 2-propanol aq. | 20 wt% MgCl$_2$ aq. | 8 | 0.12 | A | A |
| 31 | L-alanyl-L-glutamine | 15 wt% acetonitrile aq. + TFA | 20 wt% MgCl$_2$ aq. | 7 | 0.16 | A | A |
| 32 | L-alanyl-L-glutamine | 15 wt% acetonitrile aq. + acetic acid | 20 wt% MgCl$_2$ aq. | 7 | 0.15 | A | A |
| 33 | L-alanyl-L-glutamine | 15 wt% acetonitrile aq. | 20 wt% MgCl$_2$ aq. | 7 | 0.14 | A | A |

[Table 7]

TABLE 2

| Comp Ex | First Step Substitute Means | | | | Raw Material Liquid a | | Evaluation Results | | |
|---|---|---|---|---|---|---|---|---|---|
| | Concentration Means | Membrane Material | Operation Conditions | | Solute | Solvent | Initial Permeation (Flux) [kg/m$^2$/hr] | Solvent Removal Rate | Solute Recovery Rate |
| | | | Operating Temperature [°C] | Concentration Ratio (times) | | | | | |
| 1 | Ultrafiltration Membrane | PES | 25 | 10 | L-alanyl-L-glutamine | 15 wt% acetonitrile aq. | 100 | A | D |
| 2 | Reverse Osmosis Membrane | PES | 25 | 5 | L-alanyl-L-glutamine | 15 wt% acetonitrile aq. | 20 | c | D |
| 3 | Decompression System | - | 25 | 10 | L-alanyl-L-glutamine | 15 wt% acetonitrile aq. | - | A | D |

DESCRIPTION OF REFERENCE SIGNS

a     raw material liquid
b     solvent
c     concentrated raw material liquid
d     draw solution
e     diluted draw solution
f     product
g     regenerated draw solution
h     concentrated draw solution
o     forward osmosis membrane
s     draw solute (salt)
r     draw solution back diffusion
D     draw solution-side space
P     osmotic pressure measurement position
R     raw material liquid-side space

**Claims**

1. A raw material liquid concentration system, comprising:

   a first unit for obtaining a concentrated raw material liquid and a diluted draw solution by contacting a raw material liquid containing a solvent and a solute and a draw solution containing a draw solute via a forward osmosis membrane to move the solvent in the raw material liquid into the draw solution and move the draw solute in the draw solution into the raw material liquid, and
   a second unit for freeze-dry processing the concentrated raw material liquid to obtain a further concentrated product.

2. The raw material liquid concentration system according to claim 1, wherein a back diffusion rate of the draw solute by which the draw solute in the draw solution moves into the raw material liquid in the first unit is 200 g/(m$^2 \times$ hr) or less.

3. The raw material liquid concentration system according to claim 1, wherein a back diffusion rate of the draw solute by which the draw solute in the draw solution moves into the raw material liquid in the first unit is 0.001 g/(m$^2 \times$ hr) to 50 g/(m$^2 \times$ hr).

4. The raw material liquid concentration system according to any one of claims 1 to 3, wherein an initial permeation flow velocity of the forward osmosis membrane regarding the solvent in the first unit is 0.15 L/(m$^2 \times$ hr) to 35 L/(m$^2 \times$ hr).

5. The raw material liquid concentration system according to any one of claims 1 to 4, wherein the solvent contained in the raw material liquid comprises:

   water, and
   one or two or more selected from the group consisting of acetonitrile, methanol, and 2-propanol.

6. The raw material liquid concentration system according to claim 4, wherein the solvent further comprises an acid component, and
   the pH of the solvent is 1 to 4.

7. The raw material liquid concentration system according to claim 6, wherein the acid component is one or two selected from the group consisting of trifluoroacetic acid and acetic acid.

8. The raw material liquid concentration system according to any one of claims 1 to 7, wherein the solute of the raw material liquid comprises one or two or more selected from the group consisting of sugars, amino acids, oligopeptides, enzymes, and nucleic acids.

9. The raw material liquid concentration system according to any one of claims 1 to 7, wherein the solute comprises a compound having a number average molecular weight of 100 to 6,000.

10. The raw material liquid concentration system according to any one of claims 1 to 9, wherein in the first unit, the contact between the raw material liquid and the draw solution via the forward osmosis membrane is a crossflow-type contact.

11. The raw material liquid concentration system according to any one of claims 1 to 10, wherein in the first unit, the temperature of the raw material liquid is 5 °C to 50 °C.

12. The raw material liquid concentration system according to any one of claims 1 to 11, further comprising a first draw solution regeneration system for removing the solvent from the diluted draw solution to obtain a regenerated draw solution, and using the obtained regenerated draw solution as the draw solution.

13. The raw material liquid concentration system according to claim 12, wherein in the first draw solution regeneration system, the removal of the solvent from the diluted draw solution comprises evaporation of the solvent from the diluted draw solution.

14. The raw material liquid concentration system according to any one of claims 1 to 13, further comprising a second draw solution regeneration system for removing the solvent from the draw solution to obtain a concentrated draw solution, mixing the obtained concentrated draw solution and the diluted draw solution to obtain a mixture, and using the obtained mixture as the draw solution.

15. The raw material liquid concentration system according to claim 14, wherein in the second draw solution regeneration system, the removal of the solvent from the draw solution comprises evaporation of the solvent from the draw solution.

16. The raw material liquid concentration system according to any one of claims 1 to 14, wherein the draw solution is a solution comprising an inorganic salt as the draw solute.

17. The raw material liquid concentration system according to any one of claims 1 to 16, wherein the draw solution is a solution comprising an alcohol as the draw solute.

18. The raw material liquid concentration system according to claim 17, wherein the alcohol comprises one or two selected from ethanol and 2-propanol.

19. The raw material liquid concentration system according to any one of claims 1 to 18, wherein the forward osmosis membrane is a membrane comprising a thin membrane layer having, as primary components, one or two or more selected form the group consisting of polyethersulfone, polysulfone, polyketone, polyetheretherketone, polyphenylene ether, polyvinylidene fluoride, polyacrylonitrile, polyimine, polyimide, polybenzoxazole, polybenzimidazole, a perfluorosulfonic acid polymer, and polyamide.

20. The raw material liquid concentration system according to any one of claims 1 to 19, wherein the forward osmosis membrane is a hollow fiber membrane.

21. The raw material liquid concentration system according to claim 20, wherein the first unit is in the form of a membrane module comprising a hollow-fiber fiber bundle constituted by a plurality of the hollow fiber forward osmosis membranes,

   each hollow fiber forward osmosis membrane comprises a microporous support membrane and a high molecular weight polymer thin film separation active layer provided on an inner surface of the microporous support membrane,
   a total membrane area of the hollow-fiber fiber bundle is 0.01 m$^2$ or more, and
   a coefficient of variation in thickness of the separation active layer in the radial direction and the longitudinal direction of the hollow-fiber fiber bundle as calculated by a method in which the mass of the separation active layer portion is measured in a scanning electron microscope image, in which a thickness direction cross-section of the separation active layer is captured, is 0 to 60%.

22. The raw material liquid concentration system according to any one of claims 1 to 21, comprising a circulation mechanism which uses the concentrated raw material liquid obtained by the first unit as the raw material liquid in the first unit.

**23.** A raw material liquid concentration method, comprising:

a first step of obtaining a concentrated raw material liquid and a diluted draw solution by contacting a raw material liquid containing a solvent and a solute and a draw solution containing a draw solute via a forward osmosis membrane to move the solvent in the raw material liquid into the draw solution and move the draw solute in the draw solution into the raw material liquid, and
a second step of freeze-dry processing the concentrated raw material liquid to obtain a further concentrated product.

**24.** The raw material liquid concentration method according to claim 23, wherein a back diffusion rate of the draw solute by which the draw solute in the draw solution moves into the raw material liquid in the first step is 200 g/(m$^2$ × hr) or less.

**25.** The raw material liquid concentration method according to claim 23, wherein a back diffusion rate of a salt by which the draw solute in the draw solution moves into the raw material liquid in the first step is 0.001 g/(m$^2$ × hr) to 50 g/(m$^2$ × hr).

**26.** The raw material liquid concentration method according to any one of claims 23 to 25, wherein an initial permeation flow velocity of the forward osmosis membrane regarding the solvent in the first step is 0.15 L/(m$^2$ × hr) to 35 L/(m$^2$ × hr).

**27.** The raw material liquid concentration method according to any one of claims 23 to 26, wherein the solvent contained in the raw material liquid comprises:

water, and
one or two or more selected from the group consisting of acetonitrile, methanol, and 2-propanol.

**28.** The raw material liquid concentration method according to claim 27, wherein the solvent further comprises an acid component, and
the pH of the solvent is 1 to 4.

**29.** The raw material liquid concentration method according to claim 28, wherein the acid component is one or two selected from the group consisting of trifluoroacetic acid and acetic acid.

**30.** The raw material liquid concentration method according to any one of claims 23 to 29, wherein the solute of the raw material liquid comprises one or two or more selected from the group consisting of sugars, amino acids, oligopeptides, enzymes, and nucleic acids.

**31.** The raw material liquid concentration method according to any one of claims 23 to 29, wherein the solute comprises a compound having a number average molecular weight of 100 to 6,000.

**32.** The raw material liquid concentration method according to any one of claims 23 to 31, wherein in the first step, the contact between the raw material liquid and the draw solution via the forward osmosis membrane is a crossflow-type contact.

**33.** The raw material liquid concentration method according to any one of claims 23 to 32, wherein in the first step, the temperature of the raw material liquid is 5 °C to 50 °C.

**34.** The raw material liquid concentration method according to any one of claims 23 to 33, further comprising a first draw solution regeneration step of removing the solvent from the diluted draw solution to obtain a regenerated draw solution, and using the obtained regenerated draw solution as the draw solution.

**35.** The raw material liquid concentration method according to claim 34, wherein in the first draw solution regeneration step, the removal of the solvent from the diluted draw solution comprises evaporation of the solvent from the diluted draw solution.

36. The raw material liquid concentration method according to any one of claims 23 to 35, further comprising a second draw solution regeneration step of removing the solvent from the draw solution to obtain a concentrated draw solution, mixing the obtained concentrated draw solution and the diluted draw solution to obtain a mixture, and using the obtained mixture as the draw solution.

37. The raw material liquid concentration method according to claim 36, wherein in the second draw solution regeneration step, the removal of the solvent from the draw solution comprises evaporation of the solvent from the draw solution.

38. The raw material liquid concentration method according to any one of claims 23 to 37, wherein the draw solution is a solution comprising an inorganic salt as the draw solute.

39. The raw material liquid concentration method according to any one of claims 23 to 37, wherein the draw solution is a solution comprising an alcohol as the draw solute.

40. The raw material liquid concentration method according to claim 39, wherein the alcohol comprises one or two selected from ethanol and 2-propanol.

41. The raw material liquid concentration method according to any one of claims 23 to 40, wherein the forward osmosis membrane is a membrane comprising a thin membrane layer having, as primary components, one or two or more selected form the group consisting of polyethersulfone, polysulfone, polyketone, polyetheretherketone, polyphenylene ether, polyvinylidene fluoride, polyacrylonitrile, polyimine, polyimide, polybenzoxazole, polybenzimidazole, a perfluorosulfonic acid polymer, and polyamide.

42. The raw material liquid concentration method according to any one of claims 23 to 41, wherein the forward osmosis membrane is a hollow fiber membrane.

43. The raw material liquid concentration method according to claim 42, wherein in the first step, a pressure in the interior of the hollow fiber forward osmosis membrane is 10 kPa to 200 kPa.

44. The raw material liquid concentration method according to claim 42 or 43, wherein the first step is carried out using a first unit which is in the form of a membrane module comprising a hollow-fiber fiber bundle constituted by a plurality of the hollow fiber forward osmosis membranes,

each hollow fiber forward osmosis membrane comprises a microporous support membrane and a high molecular weight polymer thin film separation active layer provided on an inner surface of the microporous support membrane,
a total membrane area of the hollow-fiber fiber bundle is 0.01 m$^2$ or more, and
a coefficient of variation in thickness of the separation active layer in the radial direction and the longitudinal direction of the hollow-fiber fiber bundle as calculated by a method in which the mass of the separation active layer portion is measured in a scanning electron microscope image, in which a thickness direction cross-section of the separation active layer is captured, is 0 to 60%.

45. The raw material liquid concentration method according to any one of claims 23 to 44, comprising a circulation mechanism which uses the concentrated raw material liquid obtained in the first step as the raw material liquid in the first step.

EP 3 978 101 A1

**FIG. 1**

**FIG. 2**

FIG. 3

FIG. 4

FIG.5

SECOND UNIT
(SECOND STEP)

FIRST UNIT
(FIRST STEP)

SECOND DRAW SOLUTION
REGENERATION UNIT
(SECOND DRAW SOLUTION
REGENERATION STEP)

CIRCULATION
MECHANISM

FREEZE-DRYING
CHAMBER
(FREEZE-DRYING)

FORWARD
MEMBRANE
UNIT
(FORWARD
OSMOSIS
PROCESSING)

BUFFER
TANK

DRAW SOLUTION
CONCENTRATION
(SOLVENT REMOVAL)

## INTERNATIONAL SEARCH REPORT

International application No.

PCT/JP2020/021232

### A. CLASSIFICATION OF SUBJECT MATTER

B01D 61/00(2006.01)i; B01D 63/02(2006.01)i; B01D 69/00(2006.01)i; B01D
69/08(2006.01)i; B01D 69/10(2006.01)i; B01D 69/12(2006.01)i; B01D
71/32(2006.01)i; B01D 71/34(2006.01)i; B01D 71/38(2006.01)i; B01D
71/42(2006.01)i; B01D 71/52(2006.01)i; B01D 71/56(2006.01)i; B01D
71/60(2006.01)i; B01D 71/62(2006.01)i; B01D 71/64(2006.01)i; B01D
71/68(2006.01)i; F26B 5/06(2006.01)i; A23L 5/00(2016.01)i
FI:     B01D61/00 500; B01D63/02; B01D69/00; B01D69/08; B01D69/10;
        B01D69/12; B01D71/32; B01D71/34; B01D71/38; B01D71/42; B01D71/52;
        B01D71/56; B01D71/60; B01D71/62; B01D71/64; B01D71/68; A23L5/00
        Z; F26B5/06

According to International Patent Classification (IPC) or to both national classification and IPC

### B. FIELDS SEARCHED

Minimum documentation searched (classification system followed by classification symbols)
B01D61/00; B01D63/02; B01D69/00; B01D69/08; B01D69/10; B01D69/12;
B01D71/32; B01D71/34; B01D71/38; B01D71/42; B01D71/52; B01D71/56;
B01D71/60; B01D71/62; B01D71/64; B01D71/68; F26B5/06; A23L5/00

Documentation searched other than minimum documentation to the extent that such documents are included in the fields searched
Published examined utility model applications of Japan     1922–1996
Published unexamined utility model applications of Japan   1971–2020
Registered utility model specifications of Japan           1996–2020
Published registered utility model applications of Japan   1994–2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/179203 A1 (MITSUBISHI HEAVY INDUSTRIES ENGINEERING, LTD.) 04.10.2018 (2018-10-04) | 1-45 |
| A | CN 107840839 A (UNIV QILU TECHNOLOGY) 27.03.2018 (2018-03-27) | 1-45 |
| A | CN 106082513 A (ZHANG, Yong-Jun) 09.11.2016 (2016-11-09) | 1-45 |
| A | US 2017/0028348 A1 (OASYS WATER, INC.) 02.02.2017 (2017-02-02) | 1-45 |

☐ Further documents are listed in the continuation of Box C.     ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 18 June 2020 (18.06.2020) | 30 June 2020 (30.06.2020) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2020/021232

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-514039 A (AQUAPORIN A/S) 19.05.2016 (2016-05-19) | 1-45 |

Form PCT/ISA/210 (continuation of second sheet) (January 2015)

## INTERNATIONAL SEARCH REPORT
### Information on patent family members

| International application No. |
| --- |
| PCT/JP2020/021232 |

| Patent Documents referred in the Report | Publication Date | Patent Family | Publication Date |
| --- | --- | --- | --- |
| WO 2018/179203 A1 | 04 Oct. 2018 | (Family: none) | |
| CN 107840839 A | 27 Mar. 2018 | (Family: none) | |
| CN 106082513 A | 09 Nov. 2016 | (Family: none) | |
| US 2017/0028348 A1 | 02 Feb. 2017 | WO 2015/157031 A1<br>EP 3129128 A1<br>AU 2015244268 A1<br>CA 2944430 A1<br>KR 10-2016-0140761 A<br>CN 106413860 A | |
| JP 2016/514039 A | 19 May 2016 | US 2016/0016127 A1<br>WO 2014/128293 A1<br>EP 2958662 A1<br>CA 2901020 A1<br>CN 105026017 A<br>KR 10-2015-0120978 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11075759 A

- WO 2011151726 A

**Non-patent literature cited in the description**

- *Nippon Shokuhin Kogyo Gakkaishi.,* 1982, vol. 30 (2), 125-132